(19) Europäisches Patentamt
European Patent Office
Office européen des brevets

(11) **EP 3 037 309 B1**

(12) **EUROPEAN PATENT SPECIFICATION**

(45) Date of publication and mention
of the grant of the patent:
**03.01.2018  Bulletin 2018/01**

(21) Application number: **15796499.0**

(22) Date of filing: **12.05.2015**

(51) Int Cl.:
**B60T 8/1755** *(2006.01)*        **B62L 3/08** *(2006.01)*

(86) International application number:
**PCT/JP2015/002408**

(87) International publication number:
**WO 2015/177985 (26.11.2015 Gazette 2015/47)**

(54) **PITCH ANGLE CONTROL SYSTEM, PITCH ANGLE CONTROL METHOD, AND VEHICLE**

STEIGUNGSWINKELSTEUERUNG SYSTEM, STEIGUNGSWINKELSTEUERUNGSVERFAHREN UND FAHRZEUG

SYSTÈME ET PROCÉDÉ DE COMMANDE DE L'ANGLE DE TANGAGE ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.05.2014  JP 2014106546**

(43) Date of publication of application:
**29.06.2016  Bulletin 2016/26**

(73) Proprietor: **Yamaha Hatsudoki Kabushiki Kaisha**
**Iwata-shi, Shizuoka 438-8501 (JP)**

(72) Inventor: **MIKI, Masayuki**
**Iwata-shi**
**Shizuoka 438-8501 (JP)**

(74) Representative: **Grünecker Patent- und**
**Rechtsanwälte**
**PartG mbB**
**Leopoldstraße 4**
**80802 München (DE)**

(56) References cited:
**EP-A1- 1 832 882**        **EP-A1- 2 551 158**
**EP-A1- 2 581 259**        **WO-A1-2012/052831**
**WO-A1-2013/172122**        **WO-A2-2007/148225**
**JP-A- H 101 040**        **JP-A- 2003 175 749**
**JP-A- 2007 237 933**        **JP-A- 2012 519 110**
**JP-A- 2013 173 426**        **US-A1- 2013 079 988**

**Description**

[Technical Field]

The present invention relates to a pitch angle control system, a method of controlling a pitch angle and a vehicle.

[Background Art]

In a vehicle such as a motorcycle, it is suggested that a pitch angle of a vehicle body is adjusted in order to inhibit a rapid change of a vehicle body posture during travelling as much as possible. In a stabilization method described in JP 2012-519110 A, a brake device or an engine torque is adjusted such that a pitch angle of the motorcycle is a target value.

In a control system described in EP 2 551 158 A1, a load distribution changing section changes a ground load distribution between the front and rear wheels during driving of the vehicle; a slip suppressing condition determiner section determines whether or not a suppressing condition used to suppress a slip of one of the front and rear wheels is met during driving of the vehicle; and a load distribution control section controls the load distribution changing section to make the ground load of the one of the front and rear wheels greater when the slip suppressing condition determiner section determines that the suppressing condition is met, than when the slip suppressing condition determiner section determines that the suppressing condition is not met.

WO 2007/148225 discloses a vehicle drive apparatus which independently controls drive forces for a front-right drive wheel, a front-left drive wheel, a rear-right drive wheel, and a rear-left drive wheel using a front-right electric motor, a front-left electric motor, a rear-right electric motor, and a rear-left electric motor, respectively. The drive forces for the drive wheels of a vehicle incorporating the vehicle drive apparatus are determined based on the target moments in the yaw and roll directions of the vehicle, the total drive for the drive wheels, and the drive reaction forces at the drive wheels.

[Summary of Invention]

[Technical Problem]

However, in the above-mentioned method, acceleration and deceleration of the vehicle are performed independently of an operation of a driver. Therefore, the driver is likely to have an uncomfortable feeling, and it causes a reduction in drivability.

An object of the present invention is to provide a pitch angle control system, a method of controlling a pitch angle and a vehicle capable of appropriately controlling the pitch angle while a reduction in drivability is prevented.

[Solution to Problem]

(1) A pitch angle control system according to one aspect of the present invention provided in a vehicle including a brake control unit that controls a front wheel brake and a rear wheel brake, wherein the vehicle includes a front wheel brake inputter and a rear wheel brake inputter operated by a driver, the pitch angle control system comprises a front wheel brake detector configured to detect an operation of the front wheel brake inputter of the vehicle by the driver, a rear wheel brake detector configured to detect an operation of the rear wheel brake inputter of the vehicle by the driver, a target brake force calculator configured to calculate a target brake force required by the driver based on the operation of the front wheel brake inputter detected by the front wheel brake detector and the operation of the rear wheel brake inputter detected by the rear wheel brake detector, a target pitch angle setter configured to set a target pitch angle, a target brake ratio calculator configured to calculate a ratio between a target front wheel brake force to be exerted on a front wheel of the vehicle and a target rear wheel brake force to be exerted on a rear wheel of the vehicle as a target brake ratio such that a pitch angle of the vehicle is a target pitch angle set by the target pitch angle setter, and a unit controller configured to control the brake control unit such that a sum of an actual front wheel brake force actually exerted on the front wheel and an actual rear wheel brake force actually exerted on the rear wheel is the target brake force calculated by the target brake force calculator, and to control the brake control unit such that a ratio between the actual front wheel brake force and the actual rear wheel brake force is the target brake ratio calculated by the target brake ratio calculator.

In this pitch angle control system, the target brake force is calculated based on the operation of the front wheel brake inputter detected by the front wheel brake detector and the operation of the rear wheel brake in putter detected by the rear wheel brake detector. Further, the target pitch angle is set, and the target brake ratio is calculated such that the pitch angle of the vehicle is the target pitch angle. The brake control unit is controlled such that the sum of the actual front wheel brake force and the actual rear wheel brake force is the target brake force, and the brake control unit is controlled such that the ratio between the actual front wheel brake force and the actual rear wheel brake force is the target brake ratio.

Because the target brake force is equivalent to the sum of the brake force required by the driver, the sum of the actual front brake force and the actual rear wheel force is the target brake force, whereby the vehicle is decelerated according to the request of the driver, and the driver is prevented from having an uncomfortable feeling. Further, the ratio between the actual front wheel brake force and the actual rear wheel brake force is the target brake ratio, so that the pitch angle of the vehicle is adjusted to the target pitch angle. From these, the pitch angle of the vehicle can be appropriately controlled while a reduction in drivability is prevented.

(2) The pitch angle control system may further include a pitch angle range calculator that calculates a pitch angle of the vehicle of when the target brake force calculated by the target brake force calculator is exerted on the front wheel as a maximum pitch angle and calculates a pitch angle of the vehicle of when the target brake force calculated by the target brake force calculator is exerted on the rear wheel as a minimum pitch angle, wherein the target pitch angle setter may set the target pitch angle between the maximum pitch angle and the minimum pitch angle calculated by the pitch angle range calculator, and the target brake ratio calculator may calculate a ratio between a difference between the maximum pitch angle calculated by the pitch angle range calculator and the target pitch angle set by the target pitch angle setter, and a difference between the target pitch angle set by the target pitch angle setter and the minimum pitch angle calculated by the pitch angle range calculator.

In this case, the target brake ratio can be easily and accurately calculated.

(3) The larger the target brake force calculated by the target brake force calculator is, the larger the target pitch angle setter may set the target pitch angle to be.

In this case, the target pitch angle can be appropriately set based on the target brake force. Thus, the drivability is improved.

(4) The target pitch angle setter may set a pitch moment limit range based on the target brake force calculated by the target brake force calculator and may correct the target pitch angle such that a pitch moment of the vehicle is in the pitch moment limit range.

In this case, a rapid change of the pitch angle of the vehicle is inhibited during the deceleration of the vehicle, so that the driver is prevented from being forced to have a large change of the posture, and smooth drivability is acquired. In particular, a rapid and large change of the vehicle body posture during rapid deceleration is inhibited.

(5) The target pitch angle setter may calculate a ratio between a normal force applied to the front wheel from a ground surface and a normal force applied to the rear wheel from the ground surface as a drag ratio and may set the target pitch angle based on the calculated drag ratio.

In this case, the target pitch angle can be set based on the strength of the grip of the front wheel and the rear wheel. Thus, the brake forces can be effectively exerted on the front wheel and the rear wheel.

(6) The brake control unit may include an antilock brake system, and the target brake force calculator may correct the target brake force based on an operation of the antilock brake system.

In this case, the pitch angle of the vehicle can be appropriately adjusted while the slips of the front wheel and the rear wheel are prevented by the antilock brake system.

(7) The pitch angle control system may further include a longitudinal force estimator that estimates longitudinal forces of the front wheel and the rear wheel, wherein the target pitch angle setter may set the target pitch angle based on the longitudinal force estimated by the longitudinal force estimator.

In this case, it is possible to perform the deceleration of the vehicle and the adjustment of the pitch angle without causing an uncomfortable feeling to the driver.

(8) A method of controlling a pitch angle of a straddled vehicle according to another aspect of the present invention including a brake control unit that controls a front wheel brake and a rear wheel brake, wherein the vehicle includes a front wheel brake inputter and a rear wheel brake inputter operated by a driver, the method of controlling the pitch angle includes the steps of detecting an operation of the front wheel brake inputter of the vehicle by the driver, detecting an operation of the rear wheel brake inputter of the vehicle by the driver, calculating a target brake force required by the driver based on the detected operation of the front wheel brake inputter and the detected operation of the rear wheel brake inputter, setting a target pitch angle, calculating a ratio between a target front wheel brake force to be exerted on a front wheel of the vehicle and a target rear wheel brake force to be exerted on a rear wheel of the vehicle as a target brake ratio such that a pitch angle of the vehicle is a set target pitch angle, and controlling the brake control unit such that a sum of an actual front wheel brake force actually exerted on the front wheel and an actual rear wheel brake force actually exerted on the rear wheel is the calculated target brake force, and controlling the brake control unit such that a ratio between the actual front wheel brake force and the actual rear wheel brake force is the calculated target brake ratio.

In this method of controlling the pitch angle, the target brake force is calculated based on the operation of the front wheel brake inputter detected by the front wheel brake detector and the operation of the rear wheel brake inputter detected by the rear wheel brake detector. Further, the target pitch angle is set, and the target brake ratio is calculated such that the pitch angle of the vehicle is the target pitch angle. Further, the brake control unit is controlled such that the sum of the actual front wheel brake force and the actual rear wheel brake force is the target brake force, and the brake control unit is controlled such that the ratio between the actual front wheel brake force and the actual rear wheel brake force is the target brake ratio.

The target brake force is equivalent to the sum of the brake forces required by the driver. Therefore, the sum of the actual front wheel brake force and the actual rear wheel brake force is the target brake force, so that the vehicle is decelerated according to the request of the driver, and the driver is prevented from having an uncomfortable feeling. Further, the ratio between the actual front wheel brake force and the actual rear wheel brake force is the target brake ratio, so that the pitch angle of the vehicle is adjusted to the target pitch angle. From these, the pitch angle of the vehicle can be appropriately controlled while a reduction in drivability is prevented.

(9) A vehicle according to yet another aspect of the present invention includes a main body having a front wheel and a rear wheel, a motor that generates a driving force for moving the main body, a front wheel brake inputter operated by a driver, a rear wheel brake inputter operated by the driver, a front wheel brake that brakes the front wheel, a rear wheel brake that brakes the rear wheel, a brake control unit that controls the front wheel brake and the rear wheel brake based on operations of the front wheel brake inputter and the rear wheel brake inputter by the driver, and the above-mentioned pitch angle control system.

In this vehicle, the main body is moved by motive power generated by the motor. In this case, the pitch angle of the vehicle is controlled by the pitch angle control system according to one aspect of the above-mentioned present invention. Thus, the pitch angle of the vehicle can be appropriately controlled while a reduction in drivability is prevented.

[Advantageous Effects of Invention]

The present invention causes the pitch angle to be appropriately controlled while a reduction in drivability is prevented.

[Brief Description of Drawings]

[FIG. 1] Fig. 1 is a schematic side view of a motorcycle according to embodiments of the present invention.
[FIG. 2] Fig. 2 is a schematic diagram for explaining a hydraulic pressure control unit and its related portions.
[FIG. 3] Fig. 3 is a block diagram for explaining details of a pitch angle control system.
[FIG. 4] Fig. 4 is a schematic side view for explaining a target brake force, a maximum pitch angle and a minimum pitch angle.
[FIG. 5] Fig. 5 is a schematic side view for explaining the target brake force, the maximum pitch angle and the minimum pitch angle.
[FIG. 6] Fig. 6 is a diagram showing a relationship among the target brake force, the maximum pitch angle, the minimum pitch angle and the target pitch angle.
[FIG. 7] Fig. 7 is a diagram showing an example of changes of the target brake force, the maximum pitch angle, the minimum pitch angle and the target pitch angle during travelling of the motorcycle.
[FIG. 8] Fig. 8 is a diagram showing another example of a relationship between the target brake force and the target pitch angle.
[FIG. 9] Fig. 9 is a flow chart of a pitch angle control process.
[FIG. 10] Fig. 10 is a block diagram for explaining a modified example of a controller.
[FIG. 11] Fig. 11 is a block diagram for explaining details of a target pitch angle corrector of Fig. 10.
[FIG. 12] Fig. 12 is a diagram for explaining a setting example of a PM limit range.
[FIG. 13] Fig. 13 is a schematic diagram for explaining an outline of correction of the target pitch angle.
[FIG. 14] Fig. 14 is a flow chart of the pitch angle control process performed by each function unit of the controller of Fig. 10.
[FIG. 15] Fig. 15 is a flow chart of a target pitch angle correction process.
[FIG. 16] Fig. 16 is a schematic side view for explaining another setting example of the target pitch angle.
[FIG. 17] Fig. 17 is a diagram showing a relationship between operation states of an ABS and hydraulic pressures used for calculation of an input front wheel brake force and an input rear wheel brake force.
[FIG. 18] Fig. 18 is a diagram for explaining another example of the pitch angle control system.

[Description of Embodiments]

A pitch angle control system, a method of controlling a pitch angle and a vehicle according to embodiments of the present invention will be described below with reference to drawings. The following description relates to a motorcycle as one example of the vehicle.

(1) Schematic Configuration of Motorcycle

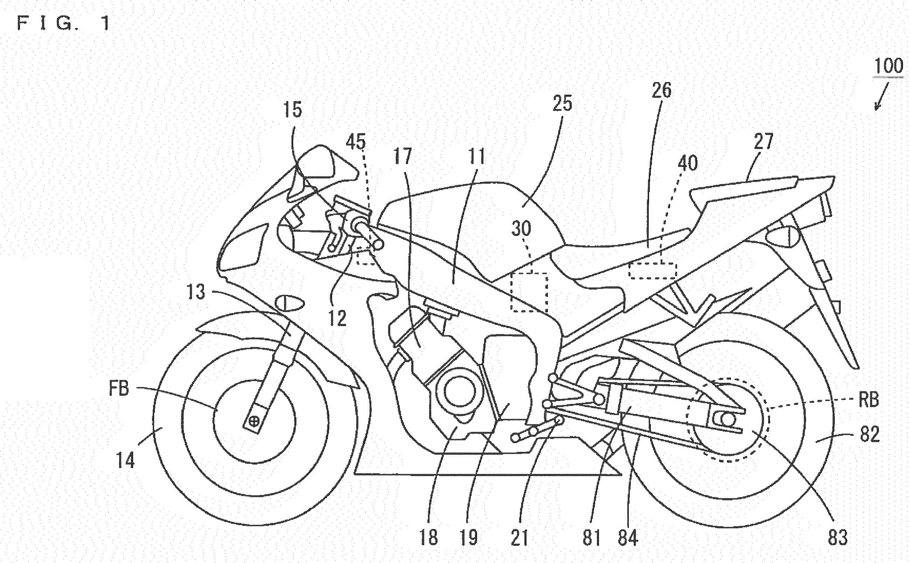

Fig. 1 is a schematic side view of the motorcycle according to the embodiment of the present invention. In the motorcycle 100 of Fig. 1, a head pipe 12 is provided at a front end of a main frame 11. A front fork 13 is provided at the head pipe 12 to be swingable in a left-and-right direction. The front fork 13 is stretchable and functions as a front suspension. A front wheel 14 is rotatably supported at a lower end of the front fork 13. Further, a front wheel brake FB is provided at the lower end of the front fork 13. A configuration of the front wheel brake FB will be described below. A handle 15 is provided at an upper end of the head pipe 12.

An engine 17 is provided below the main frame 11. A crankcase 18 is provided at a lower portion of the engine 17. A mission case 19 is provided behind the crankcase 18. A shift pedal 21 is provided at a left side portion of the mission case 19.

A swing arm 81 is attached to the main frame 11 to extend rearward of the mission case 19. The swing arm 81 is swingable with respect to the main frame 11 and functions as a rear suspension. A rear wheel 82 and a rear wheel driven sprocket 83 are rotatably supported at a rear end of the swing arm 81. A chain 84 is attached to the rear wheel driven sprocket 83. Further, a rear wheel brake RB is provided at the rear end of the swing arm 81. The configuration of the rear wheel brake RB will be described below.

A fuel tank 25 is provided above the engine 17, and two seats 26, 27 are provided behind the fuel tank 25 to be arranged in a front-and-rear direction. A hydraulic pressure control unit 30 and a controller 40 are provided below the fuel tank 25 and the two seats 26, 27.

(2) Hydraulic Pressure Control Unit

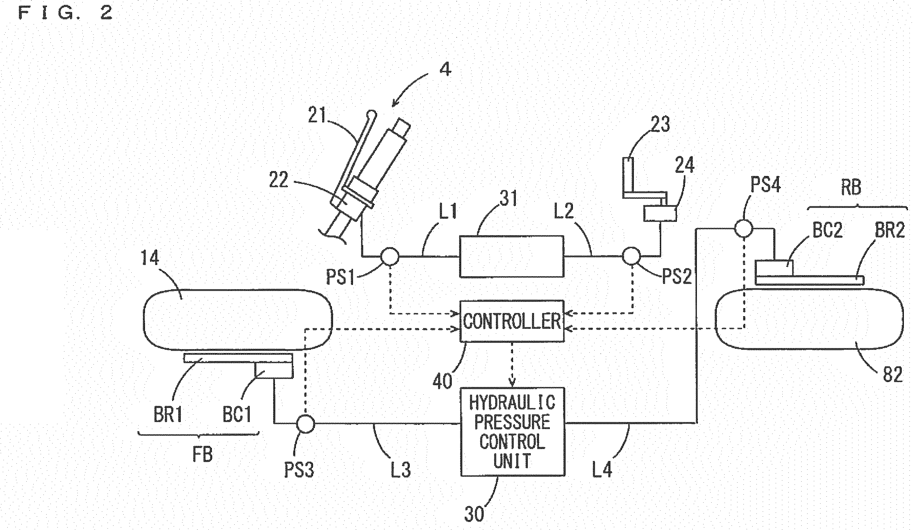

Fig. 2 is a schematic diagram for explaining the hydraulic pressure control unit 30 and its related portions. As shown in Fig. 2, a brake lever 21 and a master cylinder 22 are provided at a right portion of the handle 15. Further, a brake pedal 23 and a master cylinder 24 are provided at a right side portion of the mission case 19 (Fig. 1). The master cylinders 22, 24 are respectively connected to a stroke simulator 31 via brake pipes L1, L2.

A hydraulic pressure of the master cylinder 22 changes depending on an operation of the brake lever 21 by a driver, and a hydraulic pressure of the master cylinder 24 changes depending on an operation of the brake pedal 23 by the driver. During the operations of the brake lever 21 and the brake pedal 23, the hydraulic pressures of the master cylinders 22,24 are maintained by the stroke simulator 31 such that suitable reaction forces are applied from the brake lever 21 and the brake pedal 23 to the driver.

A hydraulic pressure sensor PS1 is provided in a brake pipe L1, and a hydraulic pressure sensor PS2 is provided in a brake pipe L2. The hydraulic pressure of the master cylinder 22 is detected by the hydraulic pressure sensor PS1, and the hydraulic pressure of the master cylinder 24 is detected by the hydraulic pressure sensor PS2. Detection results acquired by the hydraulic pressure sensors PS1, PS2 are supplied to the controller 40.

A front wheel brake FB includes a brake rotor BR1 and a brake caliper BC1, and a rear wheel brake RB includes a brake rotor BR2 and a brake caliper BC2. The brake rotor BR1 is rotated together with the front wheel 14, and the brake rotor BR2 is rotated together with the rear wheel 82.

The brake calipers BC1, BC2 respectively include brake pads. The brake pad of the brake caliper BC1 is pressed against the brake rotor BR1 by the hydraulic pressure, so that the front wheel 14 is braked. Similarly, the brake pad of the brake caliper BC2 is pressed against the brake rotor BR2 by the hydraulic pressure, so that the rear wheel 82 is braked.

The brake calipers BC1, BC2 are respectively connected to the hydraulic pressure control unit 30 via the brake pipes L3, L4. The hydraulic pressure control unit 30 adjusts a brake force exerted on the front wheel 14 by adjusting the hydraulic pressure in the brake caliper BC1 and adjusts a brake force exerted on the rear wheel 82 by adjusting the hydraulic pressure in the brake caliper BC2. The brake calipers BC1, BC2 and the hydraulic pressure control unit 30 constitute an antilock braking system (ABS) and are operated to prevent the slips of the front wheel 14 and the rear wheel 82.

A hydraulic pressure sensor PS3 is provided in a brake pipe L3, and a hydraulic pressure sensor PS4 is provided in a brake pipe L4. The hydraulic pressure in the brake caliper BC1 is detected by the hydraulic pressure sensor PS3, and the hydraulic pressure in the brake caliper BC2 is detected by the hydraulic pressure sensor PS4. Detection results acquired by the hydraulic pressure sensors PS3, PS4 are supplied to the controller 40.

The controller 40 includes a CPU (Central Processing Unit), a ROM (Read On Memory) and a RAM (Random Access Memory). The CPU of the controller 40 controls the hydraulic pressure control unit 30 based on the detection results of the hydraulic pressure sensors PS1 to PS4. Further, the CPU controls a basic operation of the engine 17 of Fig. 1. The ROM stores a control program of the CPU and the like. The RAM stores various data and functions as a processing area for the CPU.

In the present embodiment, the pitch angle control system is constituted by the hydraulic pressure sensors PS1 to PS4 and the controller 40. A pitch angle of the motorcycle 100 is controlled by the pitch angle control system. The pitch angle is a rotation angle of the main frame 11 with an axis in a direction perpendicular to a center plane (a symmetrical plane) of the main frame 11 as a center. Details of the pitch angle will be described below.

(3) Pitch Angle Control System

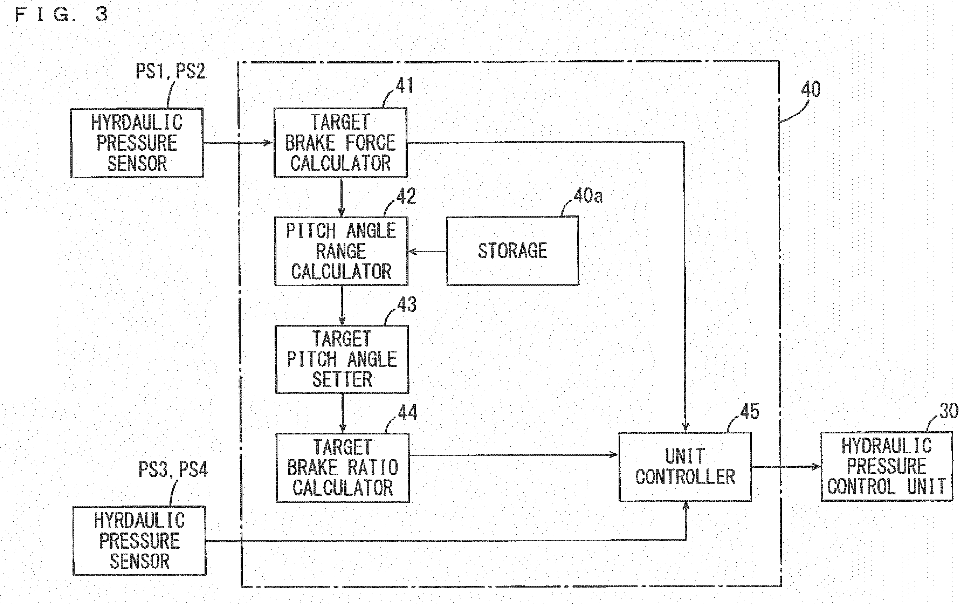

Fig. 3 is a block diagram for explaining the details of the pitch angle control system. As shown in Fig. 3, the controller 40 realizes functions of a target brake force calculator 41, a pitch angle range calculator 42, a target pitch angle setter 43, a target brake ratio calculator 44 and a unit controller 45. While these functions are realized by the CPU and the control program in the present example, at least part of these functions may be realized by hardware such as an electronic circuit.

The controller 40 includes a storage 40a. The storage 40a may be the above-mentioned ROM, another storage element such as a flash memory or a hard disc, or a storage device. Specification information indicating characteristics of the motorcycle 100 is stored in the storage 40a. The specification information includes a mass, a dimension, a position of a center of gravity and the like.

The target brake force calculator 41 calculates a target brake force based on detection results of the hydraulic pressure sensors PS1, PS2. The target brake force is the sum of the brake force of the front wheel 14 corresponding to the hydraulic pressure of the master cylinder 22 of Fig. 2 (hereinafter referred to as an input front wheel brake force) and the brake force of the rear wheel 82 corresponding to the hydraulic pressure of the master cylinder 24 of Fig. 2 (hereinafter referred to as an input rear wheel brake force).

In this case, the hydraulic pressure of the master cylinder 22 detected by the hydraulic pressure sensor PS1 is multiplied by a constant brake force conversion coefficient G1, so that the input front wheel brake force is calculated. Further, the hydraulic pressure of the master cylinder 24 detected by the hydraulic pressure sensor PS2 is multiplied by a constant brake force conversion coefficient G2, so that the input rear wheel brake force is calculated.

The pitch angle range calculator 42 calculates a maximum pitch angle and a minimum pitch angle based on the specification information stored in the storage 40a and the target brake force calculated by the target brake force calculator 41. The maximum pitch angle is a pitch angle of when the target brake force is exerted on the front wheel 14, and the minimum pitch angle is a pitch angle of when the target brake force is exerted on the rear wheel 82.

The target pitch angle setter 43 sets a target pitch angle between the maximum pitch angle and the minimum pitch angle calculated by the pitch angle range calculator 42. Setting of the target pitch angle will be described below.

The target brake ratio calculator 44 calculates a target brake ratio based on the target pitch angle set by the target pitch angle setter 43 such that the pitch angle of the motorcycle 100 is the target pitch angle. The target brake ratio is a ratio between the brake force to be exerted on the front wheel 14 (hereinafter referred to as a target front wheel brake force) and a brake force to be exerted on the rear wheel 82 (hereinafter referred to as a target rear wheel brake force).

The unit controller 45 controls the hydraulic pressure control unit 30 based on the target brake force calculated by the target brake force calculator 41 and the target brake ratio calculated by the target brake ratio calculator 44. In this case, the unit controller 45 calculates a hydraulic pressure to be supplied to the brake caliper BC1 of Fig. 2 (hereinafter referred to as a target front wheel hydraulic pressure) in order to generate the target front wheel brake force, and calculates a hydraulic pressure to be supplied to the brake caliper BC2 of Fig. 2 in order to generate the target rear wheel brake force (hereinafter referred to as a target rear wheel hydraulic pressure). The unit controller 45 controls the hydraulic pressure control unit 30 based on the calculated target front wheel hydraulic pressure and target rear wheel hydraulic pressure and the detection results of the hydraulic pressure sensors PS3, PS4.

(4) Target Brake Force, Maximum Pitch Angle and Minimum Pitch Angle

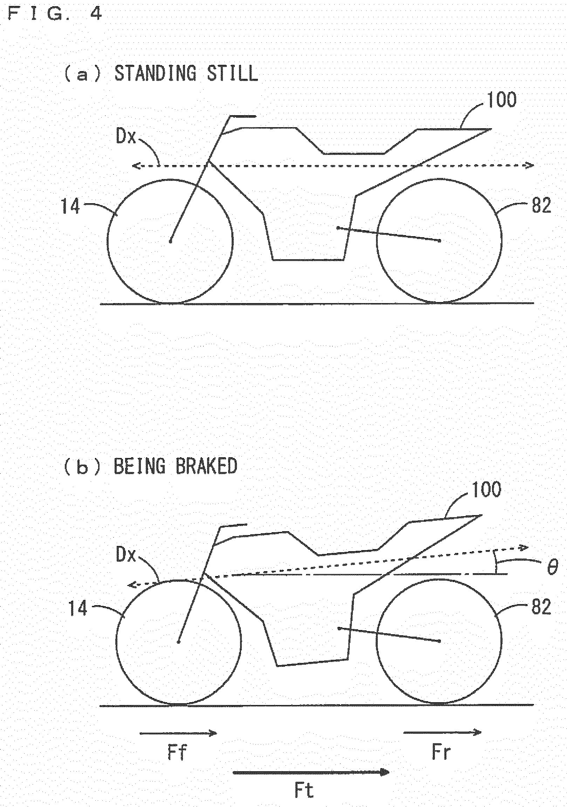

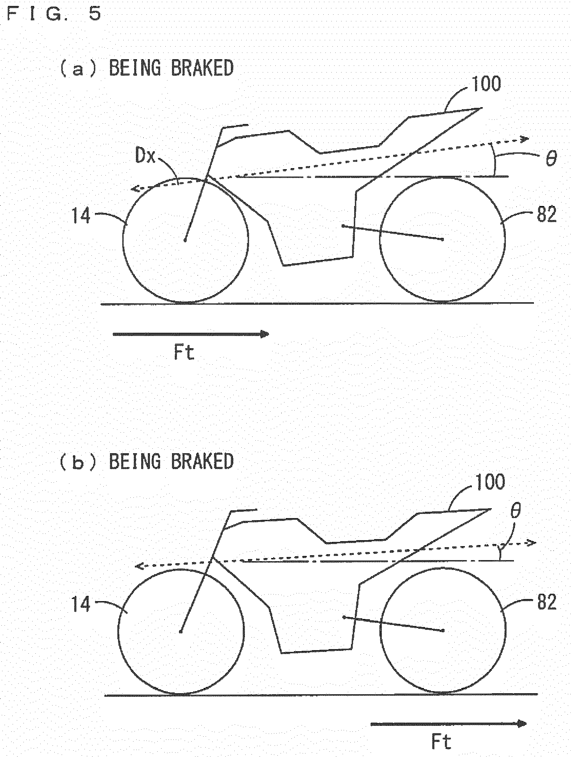

Figs. 4 and 5 are schematic side views for explaining the target brake force, the maximum pitch angle and the minimum pitch angle. The motorcycle 100 standing still is shown in Fig. 4(a). In Figs. 4(by, 5(a) and 5(b), the motorcycles 100 being braked are shown. In Figs. 4 and 5, vehicle front and rear axis Dx of the motorcycle 100 are shown. The vehicle front and rear axis Dx is in parallel with a center plane of the main frame 11 (Fig. 1) and has a constant positional relationship with the main frame 11.

As shown in Fig. 4(a), when the motorcycle 100 is standing still, the vehicle front and rear axis Dx is in parallel with a ground surface. In the present example, the pitch angle is an angle formed by the vehicle front and rear axis Dx with the ground surface. When the motorcycle 100 is standing still, the pitch angle is 0°.

As shown in Fig. 4(b), when the motorcycle 100 is braked, the pitch angle θ is larger than 0° due to the actions of the front suspension and the rear suspension. In the present example, the input front wheel brake force is Ff, and the input rear wheel brake force is Fr. The sum of the input front wheel brake force Ff and the input rear wheel brake force Fr is a target brake force Ft.

The pitch angles are different from one another according to a ratio between the brake force exerted on the front wheel 14 and the brake force exerted on the rear wheel 82. When the sum of the brake force exerted on the front wheel 14 and the brake force exerted on the rear wheel 82 is constant, the larger the brake force exerted on the front wheel 14 is, the larger the pitch angle is.

As shown in Fig. 5(a), the pitch angle θ of when the entire target brake force Ft is exerted on the front wheel 14 is calculated as the maximum pitch angle. Further, as shown in Fig. 5(b), the pitch angle θ of when the entire target brake force Ft is exerted on the rear wheel 82 is calculated as the minimum pitch angle.

Even when the target brake forces Ft are equal to one another, each maximum pitch angle and each minimum pitch angle are different depending on the type of the motorcycle 100. Therefore, as described above, the maximum pitch angle and the minimum pitch angle are calculated using the specification information of the motorcycle 100.

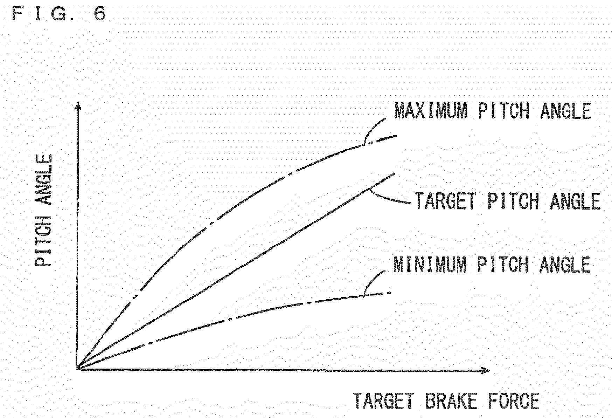

Fig. 6 is a diagram showing a relationship among the target brake force, the maximum pitch angle, the minimum pitch angle and the target pitch angle. In Fig. 6, the ordinate indicates the target brake force, and the abscissa indicates the pitch angle. In the example of Fig. 6, the larger the target brake force is, the larger both of the maximum pitch angle and the minimum pitch angle are. Further, as the normal characteristic of the front suspension and the rear suspension, the larger the applied force is, the less likely the pitch angle is to change. Therefore, rates of change of the maximum pitch angle and the minimum pitch angle decrease as the target brake force increases.

(5) Target Pitch Angle and Target Brake Ratio

In the present embodiment, the target pitch angle is set between the maximum pitch angle and the minimum pitch angle to have a constant relationship with the target brake force. In the example of Fig. 6, the target brake force and the target pitch angle have a proportional relationship. A relationship between the target brake force and the target pitch angle is stored in advance in the storage 40a of Fig. 3 as a map, for example.

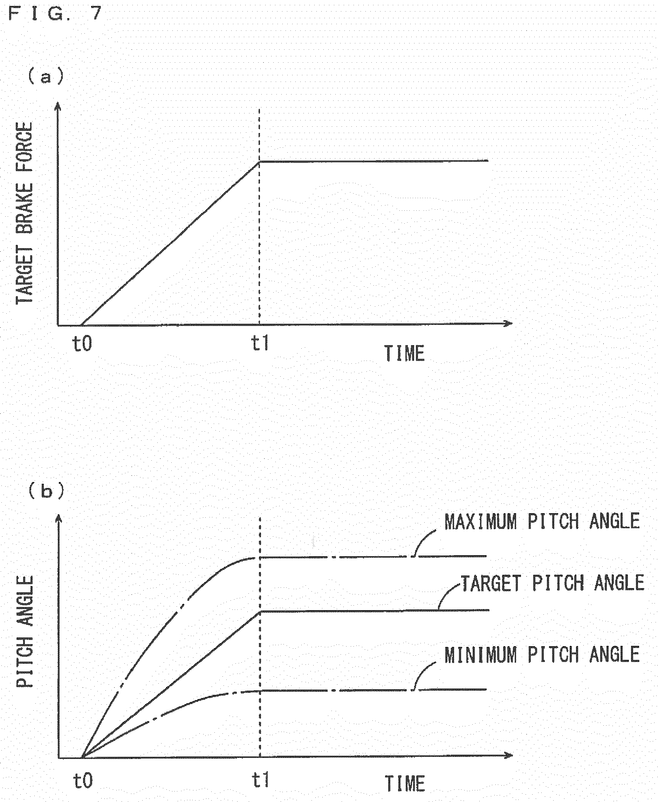

Fig. 7 is a diagram showing an example of changes of the target brake force, the maximum pitch angle, the minimum pitch angle and the target pitch angle during the travelling of the motorcycle 100. In Figs. 7(a) and 7(b), the ordinates respectively indicate the target brake force and the pitch angle, and the abscissas indicate the time. In the example of Fig. 7, the maximum pitch angle, the minimum pitch angle and the target pitch angle satisfy the relationship shown in Fig. 6 with the target brake force.

In the example of Fig. 7(a), the target brake force is maintained at 0 until a time point t0. The target brake force linearly increases from the time point t0 to a time point t1, and the target brake force is maintained constant from the time point t1.

In this case, as shown in Fig. 7(b), the maximum pitch angle, the minimum pitch angle and the target pitch angle are maintained at 0 until the time point t0. From the time point t0 to the time point t1, the maximum pitch angle and the minimum pitch angle gradually increase. The closer it is to the time point t1, the smaller the rates of change of the maximum pitch angle and the minimum pitch angle are. On the one hand, from the time point t0 to the time point t1, the target pitch angle linearly increases between the maximum pitch angle and the minimum pitch angle. From the time point t1, the maximum pitch angle, the minimum pitch angle and the target pitch angle are respectively maintained constant.

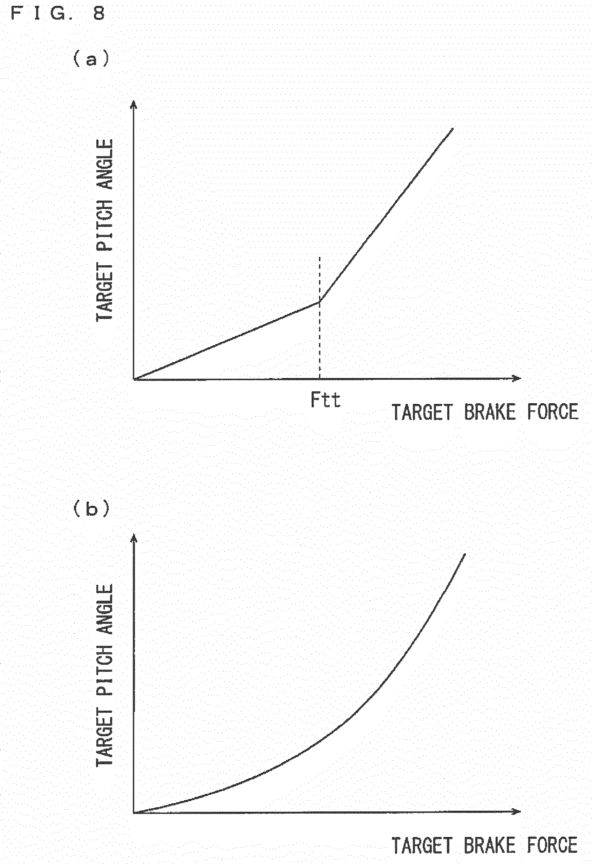

A relationship between the target brake force and the target pitch angle is not limited to the example of Fig. 6. Fig. 8 is a diagram showing another example of the relationship between the target brake force and the target pitch angle.

In the example of Fig. 8(a), when the target brake force is in a range of not less than 0 and not more than a prescribed value Ftt, the target pitch angle linearly increases at a first rate of change as the target brake force increases. When the target brake force is larger than the prescribed value Ftt, the target pitch angle linearly increases at a second rate of change as the target brake force increases. The second rate of change is larger than the first rate of change. Further, in the example of Fig. 8(b), the rate of change of the target pitch angle gradually increases as the target brake force increases.

As in the examples of Figs. 8(a) and 8(b), the rate of change of the target pitch angle may be different depending on the magnitude of the target brake force. Thus, drivability can be more sufficiently improved. A plurality of patterns may be stored in advance as the relationship between the target brake force and the target pitch angle, and one of these plurality of patterns may be selectable by the driver.

The target brake ratio is calculated based on the calculated maximum and minimum pitch angles, and the set target pitch angle. The target brake ratio is expressed by a following formula (1).

$$\text{The target brake ratio} = (\text{the target pitch angle} - \text{the minimum pitch angle})/(\text{the}$$

$$\text{maximum pitch angle} - \text{the minimum pitch angle}) \cdots (1)$$

The target front wheel hydraulic pressure and the target rear wheel hydraulic pressure are calculated based on the calculated target brake force and target brake ratio. The target front wheel hydraulic pressure is expressed by a following formula (2), and the target rear wheel hydraulic pressure is expressed by a following formula (3).

$$\text{The target front wheel hydraulic pressure} = \text{the target brake force} \times \text{the target}$$

$$\text{brake ratio/the brake force conversion coefficient } G1 \cdots (2)$$

$$\text{The target rear wheel hydraulic pressure} = \text{the target brake force} \times (1 - \text{the target}$$

$$\text{brake force ratio)/the brake force conversion coefficient } G2 \cdots (3)$$

The hydraulic pressure control unit 30 is controlled such that the calculated target front wheel hydraulic pressure is supplied to the brake caliper BC1 (Fig. 2), and the hydraulic pressure control unit 30 is controlled such that the calculated target rear wheel hydraulic pressure is supplied to the brake caliper BC2 (Fig. 2). Thus, the brake force actually exerted on the front wheel 14 (hereinafter referred to as an actual front wheel brake force) is equal to the target front wheel brake force, and the brake force actually exerted on the rear wheel 82 (hereinafter referred to as an actual rear wheel brake force) is equal to the target rear wheel brake force. In this case, the sum of the actual front wheel brake force and the actual rear wheel brake force is equal to the target brake force, so that the motorcycle 100 is decelerated according to the request of the driver. Further, the ratio between the actual front wheel brake force and the actual rear wheel brake force is equal to the target brake ratio, so that the pitch angle of the motorcycle 100 is adjusted to the target pitch angle.

(6) Pitch Angle Control Process

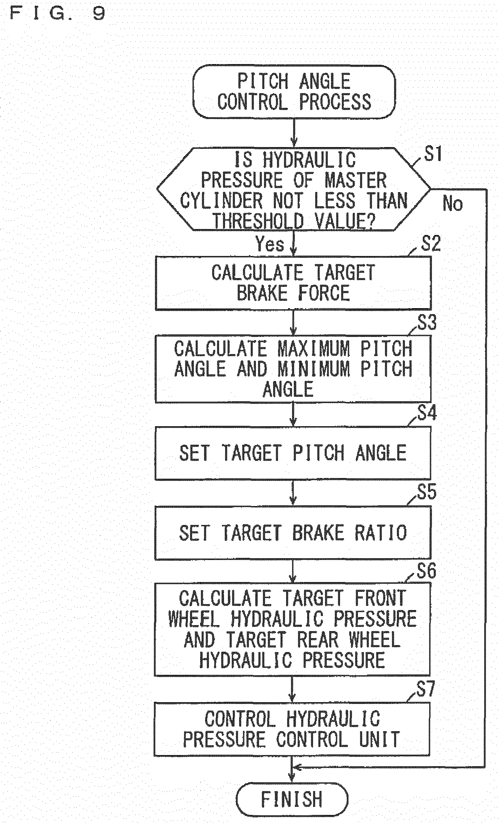

Each functional unit realized by the CPU of the controller 40 performs the pitch angle control process based on a control program stored in the ROM. Fig. 9 is a flow chart of the pitch angle control process. The pitch angle control process of Fig. 9 is repeatedly performed in a constant period during the travelling of the motorcycle 100.

As shown in Fig. 9, the target brake force calculator 41 (Fig. 3) first determines whether the hydraulic pressure of at least one of the master cylinders 22, 24 is not less than a predetermined threshold value based on the detection results of the hydraulic pressure sensors PS1, PS2 (step S1). When the driver operates the brake lever 21 or the brake pedal 23, the hydraulic pressure of at least one of the master cylinders 22, 24 is not less than the threshold value.

When the hydraulic pressure is smaller than the threshold value, the CPU finishes the pitch angle control process without performing the following process. When the hydraulic pressure is not less than the threshold value, the target brake force calculator 41 calculates the target brake force based on the detection results of the hydraulic pressure sensors PS1, PS2 (step S2).

Next, the pitch angle range calculator 42 calculates the maximum pitch angle and the minimum pitch angle as in the example of Fig. 6 based on the specification information stored in the storage 40a and the target brake force calculated by the target brake force calculator 41 (step S3). Then, the target pitch angle setter 43 sets the target pitch angle between the maximum pitch angle and the minimum pitch angle calculated by the pitch angle range calculator 42 as in the example of Fig. 6 (step S4).

Next, the target brake ratio calculator 44 calculates the target brake ratio by the above formula (1) based on the target pitch angle set by the target pitch angle setter 43 (step S5). Next, the unit controller 45 calculates the target front wheel hydraulic pressure and the target rear wheel hydraulic pressure by the above formula (2) and the above formula (3) based on the target brake force calculated by the target brake force calculator 41 and the target brake ratio calculated by the target brake ratio calculator 44 (step S6). Thereafter, the unit controller 45 controls the hydraulic pressure control unit 30 such that the calculated target front wheel hydraulic pressure and target rear wheel hydraulic pressure are respectively supplied to the brake calipers BC1, BC2 (step S7). Thus, the pitch angle control process is finished.

(7) Effects

In the pitch angle control system according to the present embodiment, the maximum pitch angle and the minimum pitch angle are calculated based on the target brake force, and the target pitch angle is set between the maximum pitch angle and the minimum pitch angle. Further, the target brake ratio is calculated based on the maximum pitch angle, the minimum pitch angle and the target pitch angle. The hydraulic pressure control unit 30 is controlled such that the sum of the actual front wheel brake force and the actual rear wheel brake force is the target brake force, and the hydraulic pressure control unit 30 is controlled such that the ratio between the actual front wheel brake force and the actual rear wheel brake force is the target brake ratio.

In this case, because the target brake force is equivalent to the sum of the brake forces required by the driver, the sum of the actual front wheel brake force and the actual rear wheel brake force is the target brake force, whereby the vehicle is decelerated according to the request of the driver, and the driver is prevented from having an uncomfortable feeling. Further, the ratio between the actual front wheel brake force and the actual rear wheel brake force is the target brake ratio, so that the pitch angle of the vehicle is adjusted to the target pitch angle. From these, the pitch angle of the motorcycle 100 can be appropriately controlled while a reduction in drivability is prevented.

Further, in the present embodiment, the target pitch angle has a constant relationship with the target brake force, and the larger the target brake force is, the larger the target pitch angle is set to be. Thus, the target pitch angle can be appropriately set based on the target brake force. As a result, the drivability can be more sufficiently improved.

(8) Correction of Target Pitch Angle

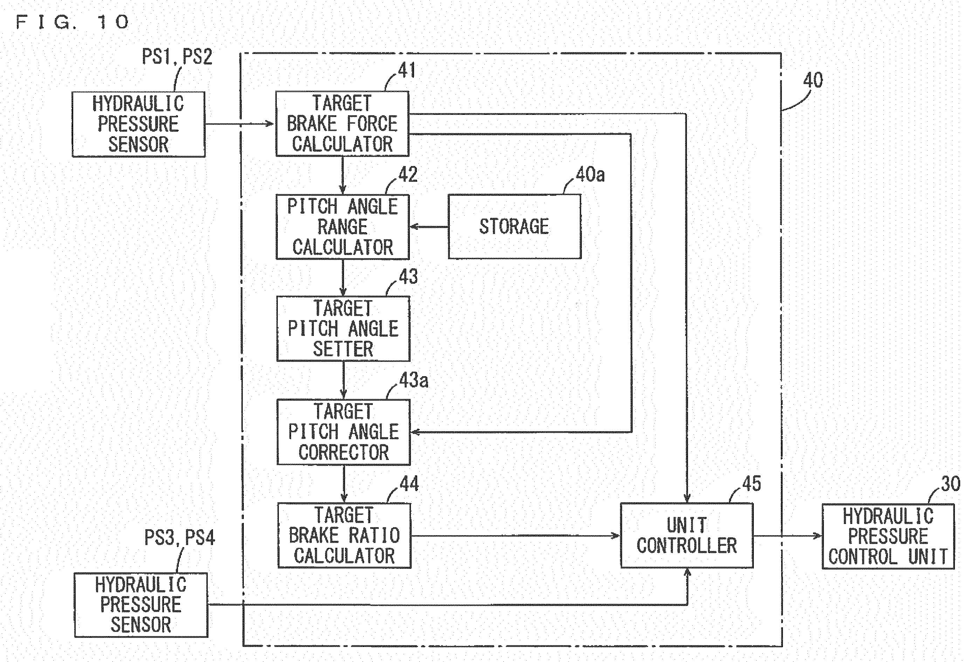

Fig. 10 is a block diagram for explaining a modified example of the controller 40. Regarding the controller 40 of Fig. 10, differences from the controller 40 of Fig. 3 will be described. The controller 40 of Fig. 10 realizes a function of a target pitch angle corrector 43a in addition to each function shown in Fig. 3.

During the braking of the motorcycle 100, when a large pitch moment momentarily occurs, the drivability may deteriorate. The target pitch angle corrector 43a sets a pitch moment limit range (hereinafter abbreviated as a PM limit range) and corrects the target pitch angle such that the pitch moment is in the PM limit range.

In the following description, the target pitch angle before being corrected by the target pitch angle corrector 43a is referred to as a pre-correction target pitch angle, and the target pitch angle after being corrected by the target pitch angle corrector 43a is referred to as a post-correction target pitch angle. Further, a pitch rate (a pitch angular speed) and a pitch moment corresponding to the pre-correction target pitch angle are referred to as a pre-correction pitch rate and a pre-correction pitch moment. Further, a pitch rate and a pitch moment corresponding to the post-correction target pitch angle are referred to as a post-correction pitch rate and a post-correction pitch moment.

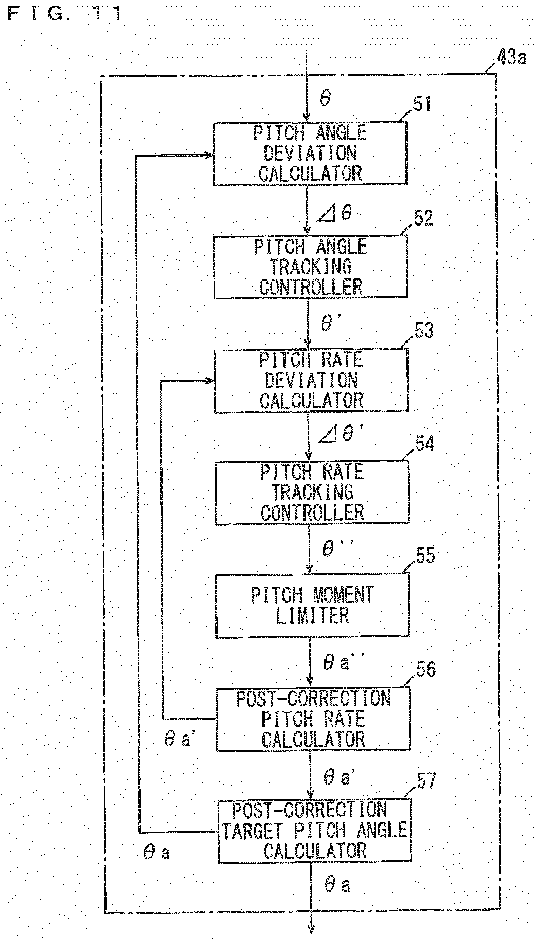

Fig. 11 is a block diagram for explaining details of the target pitch angle corrector 43a of Fig. 10. In the example of Fig. 11, a pitch angle deviation calculator 51, a pitch angle tracking controller 52, a pitch rate deviation calculator 53, a pitch rate tracking controller 54, a pitch moment limiter 55, a post-correction pitch rate calculator 56 and a post-correction target pitch angle calculator 57 are realized as the function of the target pitch angle corrector 43a.

The pitch angle deviation calculator 51 calculates a pitch angle deviation $\Delta\theta$ based on the pre-correction target pitch angle $\theta$ set by the target pitch angle setter 43 of Fig. 10 and a post-correction target pitch angle $\theta a$ calculated by the post-correction target pitch angle calculator 57 as described below. The pitch angle deviation $\Delta\theta$ is expressed by a following formula (4).

$$\text{The pitch angle deviation } \Delta\theta = \text{the pre-correction target pitch angle } \theta - \text{the}$$
$$\text{post-correction target pitch angle } \theta a \cdots (4)$$

The pitch angle tracking controller 52 calculates a pre-correction pitch rate $\theta'$ based on the pitch angle deviation $\Delta\theta$ calculated by the pitch angle deviation calculator 51. The pre-correction pitch rate $\theta'$ is expressed by a following formula (5).

$$\text{The pre-correction pitch rate } \theta' = \text{the pitch angle deviation } \Delta\theta \times \text{a gain Ga1} \cdots (5)$$

In the formula (5), the gain Ga1 is a constant value acquired by an experiment, simulation or the like and stored in the storage 40a of Fig. 10 in advance, for example.

The pitch rate deviation calculator 53 calculates the pitch rate deviation $\Delta\theta'$ based on the pre-correction pitch rate $\theta'$ calculated by the pitch angle tracking controller 52 and the post-correction pitch rate $\theta a'$ calculated by the post-correction pitch rate calculator 56 as described below. The pitch rate deviation $\Delta\theta'$ is expressed by the following formula (6).

$$\text{The pitch rate deviation } \Delta\theta' = \text{the pre-correction pitch rate } \theta' - \text{the post-correction}$$
$$\text{pitch rate } \theta a' \cdots (6)$$

The pitch rate tracking controller 54 calculates the pre-correction pitch moment $\theta''$ based on the pitch rate deviation $\Delta\theta'$ calculated by the pitch rate deviation calculator 53. The pre-correction pitch moment $\theta''$ is expressed by the following formula (7).

$$\text{The pre-correction pitch moment } \theta'' = \text{the pitch rate deviation } \Delta\theta' \times \text{a gain}$$
$$\text{Ga2} \cdots (7)$$

In the formula (7), the gain Ga2 is a constant value acquired by an experiment, simulation or the like and is stored in the storage 40a of Fig. 10 in advance, for example.

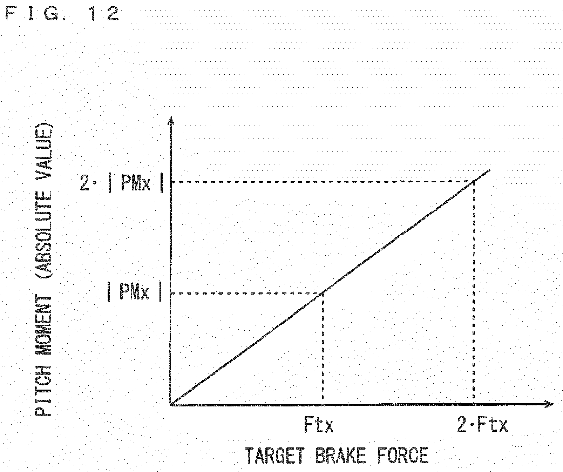

The pitch moment limiter 55 sets the PM limit range based on the target brake force calculated by the target brake force calculator 41 of Fig. 10. Fig. 12 is a diagram for explaining a setting example of the PM limit range. In Fig. 12, the ordinate indicates the target brake force, and the abscissa indicates an absolute value of the pitch moment. In this case, absolute values of an upper limit value and a lower limit value of the PM limit range are equivalent to absolute values of the pitch moment indicated by the ordinate.

In the example of Fig. 12, the absolute values of the upper limit value and the lower limit value of the PM limit range linearly increase as the target brake force increases. Specifically, the PM limit range of when the target brake force is Ftx is not less than -PMx and not more than PMx, and the PM limit range of when the target brake force is 2·Ftx is not less than -2·PMx and not more than 2·PMx.

For example, a map indicating a relationship between the target brake force and the PM limit range is stored in the storage 40a of Fig. 10 in advance. The pitch moment limiter 55 of Fig. 11 acquires the PM limit range corresponding to the target brake force from the map stored in the storage 40a. Thus, the PM limit range is set.

Further, the pitch moment limiter 55 calculates the post-correction pitch moment $\theta a''$ based on the pre-correction pitch moment $\theta''$ calculated by the pitch rate tracking controller 54 and the set PM limit range. Details of the post-correction pitch moment $\theta a''$ will be described below.

The post-correction pitch rate calculator 56 calculates the post-correction pitch rate $\theta a'$ by integrating the post-correction pitch moment $\theta a''$ calculated by the pitch moment limiter 55. The post-correction target pitch angle calculator 57 calculates the post-correction target pitch angle $\theta a$ by integrating the post-correction pitch rate $\theta a'$ calculated by the post-correction pitch rate calculator 56. The calculated post-correction target pitch angle $\theta a$ is supplied to the target brake ratio calculator 44 of Fig. 10.

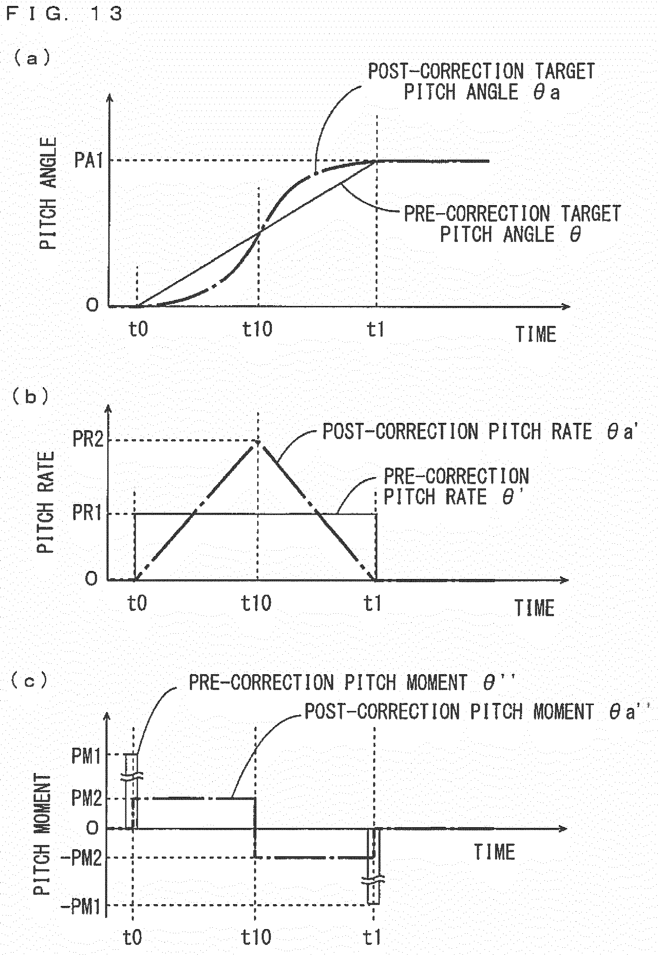

Fig. 13 is a schematic diagram for explaining an outline of the correction of the target pitch angle. The ordinate indicates the pitch angle in Fig. 13(a), the ordinate indicates the pitch rate in Fig. 13(b), and the ordinate indicates the pitch moment in Fig. 13(c). In Figs. 13(a) to 13(c), the abscissas indicate the time. Further, in Fig. 13(c), the pitch moment exerted during an increase of the pitch rate is indicated by a positive value, and the pitch moment exerted during a decrease of the pitch rate is indicated by a negative value.

Solid lines in Figs. 13(a) to 13(c) respectively indicate changes of the pre-correction target pitch angle $\theta$, the pre-correction pitch rate $\theta'$ and the pre-correction pitch moment $\theta''$. One-dot and dash lines in Figs. 13(a) to 13(c) respectively indicate changes of the post-correction target pitch angle $\theta a$, the post-correction pitch rate $\theta a'$ and the post-correction pitch moment $\theta a''$.

In the example of Fig. 13(a), the pre-correction target pitch angle $\theta$ is maintained at 0° until the time point t0, linearly increases from the time point t0 to the time point t1, and is maintained at a constant value PA1 from the time point t1. In this case, as shown in Fig. 13(b), the pre-correction pitch rate $\theta'$ is maintained at 0 until the time point t0, is maintained at a constant value PR1 from the time point t0 to the time point t1, and is maintained at 0 from the time point t1. Further, as shown in Fig. 13(c), the pre-correction pitch moment $\theta''$ momentarily becomes PM1 at the time point t0, momentarily becomes -PM1 at the time point t1, and is maintained at 0 in other periods.

In the present example, a range of not less than -PM2 and not more than PM2 is set as the PM limit range. In the present example, even when the target brake force changes, the PM limit range is constant in order to facilitate understanding. Actually, as described above, the PM limit range changes corresponding to the changes of the target brake force. The absolute value of PM1 of Fig. 13(c) is larger than the absolute value of PM2. Therefore, the target pitch angle is corrected such that the pitch moment is in the PM limit range.

Specifically, when the pre-correction pitch moment $\theta''$ is larger than the upper limit value of the PM limit range, the upper limit value of the PM limit range is the post-correction pitch moment $\theta a''$. On the one hand, when the pre-correction pitch moment $\theta''$ is smaller than the lower limit value of the PM limit range, the lower limit value of the PM limit range is the post-correction pitch moment $\theta a''$.

Further, a time integration value of the pre-correction pitch moment θ" and a time integration value of the post-correction pitch moment θa" are required to coincide with each other such that a final amount of change of the pre-correction target pitch angle θ and a final amount of change of the post-correction target pitch angle θa coincide with each other.

In the example of Fig. 13(c), the post-correction pitch moment θa" is maintained at 0 until the time point t0, is maintained at PM2 from the time point t0 to a time point t10, is maintained at -PM2 from the time point t10 to the time point t1, and is maintained at 0 from the time point t1.

In this case, as shown in Fig. 13(b), the post-correction pitch rate θa' is maintained at 0 until the time point t0, linearly increases from the time point t0 to the time point t10, and is PR2 at the time point t10. Further, the post-correction pitch rate θa' linearly decreases from the time point t10 to the time point t1 and is maintained at 0 from the time point t1.

Further, as shown in Fig. 13(a), a rate of change (a tilt) of the post-correction target pitch angle θa gradually increases from the time point t0 to the time point t10 and the post-correction target pitch angle θa changes in a curve such that the rate of change gradually decreases from the time point t10 to the time point t0. In this case, the post-correction target pitch angle θa smoothly increases from 0° at the time point t0 and smoothly reaches PA1 at the time point t1.

In the present example, a rapid change of the pitch angle is inhibited during deceleration of the motorcycle 100, so that a large change of posture is prevented from being forced to the driver, and the smooth drivability can be acquired. In particular, a rapid and large change of the vehicle body posture of the motorcycle 100 is inhibited during rapid deceleration.

There is a case in which the post-correction target pitch angle θa calculated as described above is smaller than the minimum pitch angle calculated by the pitch angle range calculator 42 (Fig. 10) or a case in which the post-correction target pitch angle θa calculated as described above is larger than the maximum pitch angle. In this case, the post-correction target pitch angle θa is corrected again. Specifically, when the post-correction target pitch angle θa is smaller than the minimum pitch angle, the post-correction target pitch angle θa is corrected again to the same value as the minimum pitch angle. On the one hand, when the post-correction target pitch angle θa is larger than the maximum pitch angle, the post-correction target pitch angle θa is corrected again to the same value as the maximum pitch value.

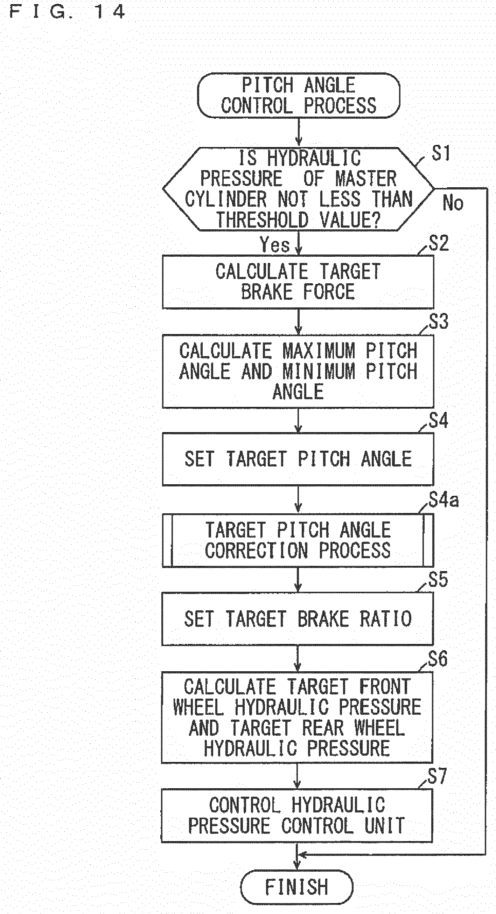

Fig. 14 is a flow chart of the pitch angle control process performed by each function unit of the controller 40 of Fig. 10. Regarding the pitch angle control process of Fig. 14, differences from the pitch angle control process of Fig. 9 will be described. In the example of Fig. 14, the target pitch angle corrector 43a performs the target pitch angle correction process between the step S4 and the step S5 (S4a). The target pitch angle set in the step S4 is corrected by the target pitch angle correction process. In the step S5, the target brake ratio calculator 44 calculates the target brake ratio based on the corrected target pitch angle (the post-correction target pitch angle θa).

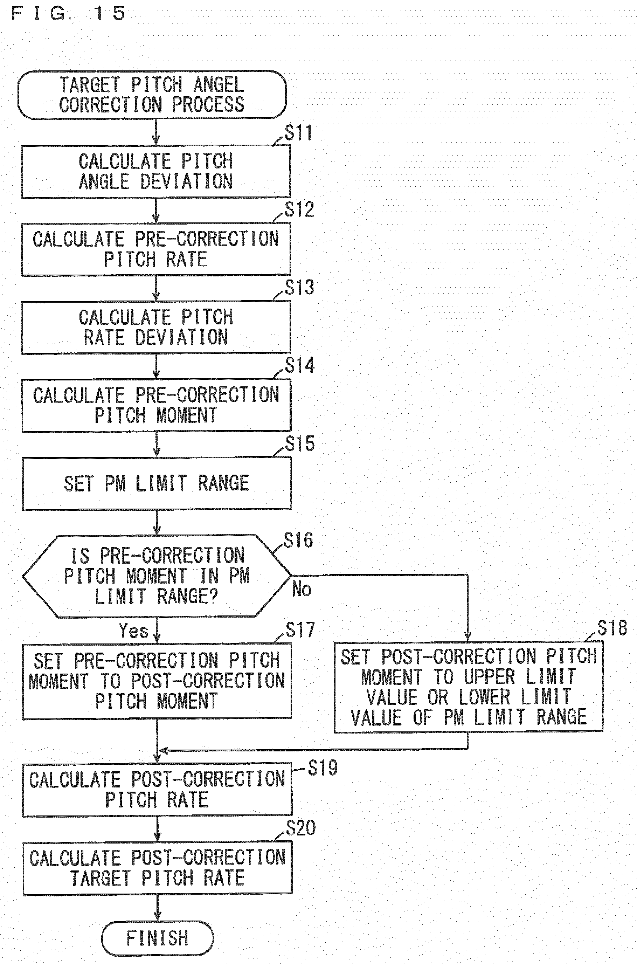

Fig. 15 is a flow chart of the target pitch angle correction process. As shown in Fig. 15, the pitch angle deviation calculator 51 (Fig. 11) first calculates the pitch angle deviation Δθ based on the pre-correction target pitch angle θ calculated in the step S4 of Fig. 14 and the post-correction target pitch angle θa calculated by the post-correction target pitch angle calculator 57 in a previous period (the step S20, described below) (step S11).

Next, the pitch angle tracking controller 52 calculates the pre-correction pitch rate θ' based on the pitch angle deviation Δθ calculated by the pitch angle deviation calculator 51 (step S12).

Then, the pitch rate deviation calculator 53 calculates the pitch rate deviation Δθ' based on the pre-correction pitch rate θ' calculated by the pitch angle tracking controller 52 and the post-correction pitch rate θa' calculated by the pitch rate calculator 56 in the previous period (step S19, described below) (step S13).

Next, the pitch rate tracking controller 54 calculates the pre-correction pitch moment θ" based on the pitch rate deviation Δθ' calculated by the pitch rate deviation calculator 53 (step S14).

Then, the pitch moment limiter 55 sets the PM limit range based on the target brake force calculated by the target brake force calculator 41 in the step S2 of Fig. 14 (step S15). Next, the pitch moment limiter 55 determines whether the pre-correction pitch moment θ" calculated by the pitch rate tracking controller 54 is in the set PM limit range (step S16).

When the pre-correction pitch moment θ" is in the set PM limit range, the pitch moment limiter 55 sets the pre-correction pitch moment θ" to the post-correction pitch moment θa" without correcting the pre-correction pitch moment θ"(step S17). On the one hand, when the pre-correction pitch moment θ" is not in the set PM limit range, the pitch moment limiter 55 sets the upper limit value or the lower limit value of the PM limit range to the post-correction pitch moment θa" (step S18).

As at the time point t0 in Fig. 13(c), when the pre-correction pitch moment θ" is a positive value and out of the PM limit range, the upper limit value of the PM limit range is set to the post-correction pitch moment θa". As at the time point t1 in Fig. 13(c), when the pre-correction pitch moment θ" is a negative value and out of the PM limit range, the lower limit value of the PM limit range is set to the post-correction pitch moment θa".

Next, the post-correction pitch rate calculator 56 calculates the post-correction pitch rate θa' by integrating the post-correction pitch moment θa" calculated by the pitch moment limiter 55 (step S19). Then, the post-correction target pitch angle calculator 57 calculates the post-correction target pitch angle θa by integrating the post-correction pitch rate θa' calculated by the post-correction pitch rate calculator 56 (step S20). Thus, the target pitch angle correction process is finished.

(9) Another Setting Example of Target Pitch Angle

In the above-mentioned example, the target pitch angle setter 43 sets the target pitch angle such that the target pitch angle has a constant relationship with the target brake force. However, the present invention is not limited to this. The target pitch angle may be set based on another condition instead of the target brake force or in addition to the target brake force.

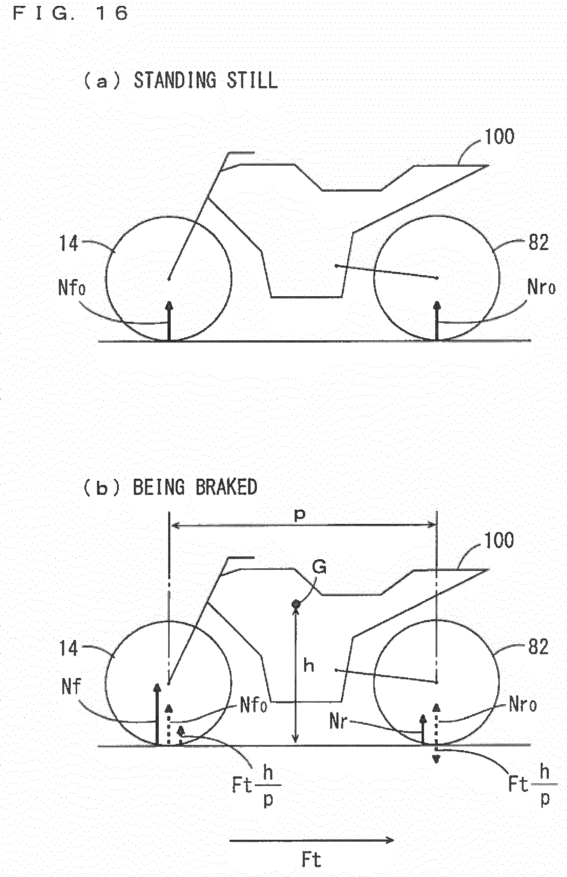

For example, the target pitch angle setter 43 of Fig. 10 may set the target pitch angle as described below. Fig. 16 is a schematic side view for explaining another setting example of the target pitch angle. In Fig. 16(a), the motorcycle 100 is standing still. In this case, a normal force Nf0 is exerted on the front wheel 14, and a normal force Nr0 is exerted on the rear wheel 82. In Fig. 16(b), the motorcycle 100 is being braked by the operation of at least one of the brake lever 21 and the brake pedal 23 of Fig. 2. In this case, when the motorcycle 100 is braked based on the target brake force Ft, the normal force Nf exerted on the front wheel 14 is expressed by a following formula (8), and the normal force Nr exerted on the rear wheel 82 is expressed by a following formula (9) regardless of the ratio between the brake force of the front wheel 14 and the brake force of the rear wheel 82.

$$Nf = Nf0 + Ft \cdot h/p \cdots (8)$$

$$Nr = Nr0 - Ft \cdot h/p \cdots (9)$$

In the formula (8) and the formula (9), h is a height of the center of gravity of the motorcycle 100, and p is a wheelbase. The height of the center of gravity h and the wheelbase p are stored in the storage 40a of Fig. 10 as the specification information.

In the present example, the target pitch angle setter 43 of Fig. 10 sets the target pitch angle based on the ratio between the normal force Nf and the normal force Nr (hereinafter referred to as a drag ratio). The drag ratio is expressed by a following formula (10), and the target pitch angle is expressed by a following formula (11).

$$\text{The drag ratio} = Nf/(Nf+Nr) \cdots (10)$$

$$\text{The target pitch angle} = \text{the minimum pitch angle} + \text{the drag ratio} \times (\text{the maximum pitch angle} - \text{the minimum pitch angle}) \cdots (11)$$

The drag ratio corresponds to a ratio between the strength of the grip of the front wheel 14 and the strength of the grip the rear wheel 82. The stronger the grip of the front wheel 14 is as compared to the grip of the rear wheel 82, the higher the drag ratio is. When the target pitch angle is set by the above formula (11), a ratio between the brake force exerted on the front wheel 14 and the brake force exerted on the rear wheel 82 corresponds to the ratio between the strength of the grip of the front wheel 14 and the strength of the grip of the rear wheel 82. That is, out of the front wheel 14 and the rear wheel 82, a larger brake force is exerted on the wheel having stronger grip. Thus, the slips of the front wheel 14 and the rear wheel 82 are prevented.

In the present example, the set target pitch angle is corrected by the target pitch angle corrector 43a of Fig. 10. Thus, an occurrence of a large pitch moment is prevented, and the drivability is improved.

(10) Calculation of Target Brake Force Based on Operation of ABS

When the ABS is operated with respect to at least one of the front wheel 14 and the rear wheel 82, the target brake force may be corrected based on the operation of the ABS. The operation of the ABS does not refer to the adjustment of the hydraulic pressures in the brake calipers BC1, BC2 (Fig. 2) by the hydraulic pressure control unit 30 in order to control the pitch angle but refers to the adjustment of the hydraulic pressures, in the brake calipers BC1, BC2 by the hydraulic pressure control unit 30 in order to prevent the slip of the front wheel 14 and the rear wheel 82, which is an essential purpose for the ABS.

In the present example, the input front wheel brake force is calculated by selectively using any one of the hydraulic pressure of the master cylinder 22 and the hydraulic pressure in the brake caliper BC1, and the input rear wheel brake force is calculated by selectively using the hydraulic pressure of the master cylinder 24 or the hydraulic pressure in the brake caliper BC2. Similarly to the above-mentioned example, the target brake force is the sum of the input front wheel brake force and the input rear wheel brake force.

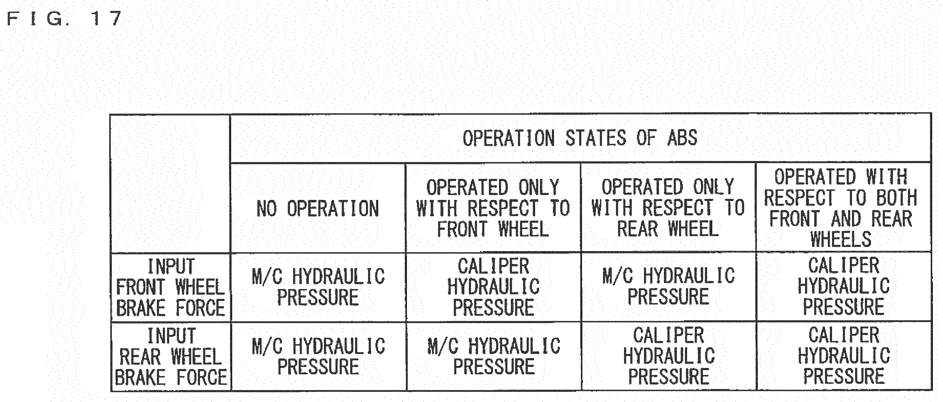

Fig. 17 is a diagram showing a relationship between operation states of the ABS, and the hydraulic pressures used for the calculation of the input front wheel brake force and the input rear wheel brake force. In Fig. 17, the hydraulic pressures of the master cylinders 22, 24 are abbreviated as M/C hydraulic pressures, and the hydraulic pressures in the brake calipers BC1, BC2 are abbreviated as caliper hydraulic pressures.

As shown in Fig. 17, when the ABS is not operated with respect to any one of the front wheel 14 and the rear wheel 82, the input front wheel brake force is calculated based on the hydraulic pressure of the master cylinder 22, and the input rear wheel brake force is calculated based on the hydraulic pressure of the master cylinder 24, similarly to the above-mentioned example. When the ABS is operated only with respect to the front wheel 14, the input front wheel brake force is calculated based on the hydraulic pressure in the brake caliper BC1, and the input rear wheel brake force is calculated based on the hydraulic pressure of the master cylinder 24.

When the ABS is operated only with respect to the rear wheel 82, the input front wheel brake force is calculated based on the hydraulic pressure of the master cylinder 22, and the input rear wheel brake force is calculated based on the hydraulic pressure of the brake caliper BC2. When the ABS is operated with respect to both of the front wheel 14 and the rear wheel 82, the input front wheel brake force is calculated based on the hydraulic pressure of the brake caliper BC1, and the input rear wheel brake force is calculated based on the hydraulic pressure of the brake caliper BC2.

In this manner, regarding the target wheel for the operation of the ABS, the input front wheel brake force or the input rear wheel brake force is calculated based on the hydraulic pressure in the brake caliper. Thus, the pitch angle of the motorcycle 100 can be appropriately adjusted while the slips of the front wheel 14 and the rear wheel 82 are prevented by the ABS.

(11) Correction of Target Pitch Angle Based on Longitudinal Force

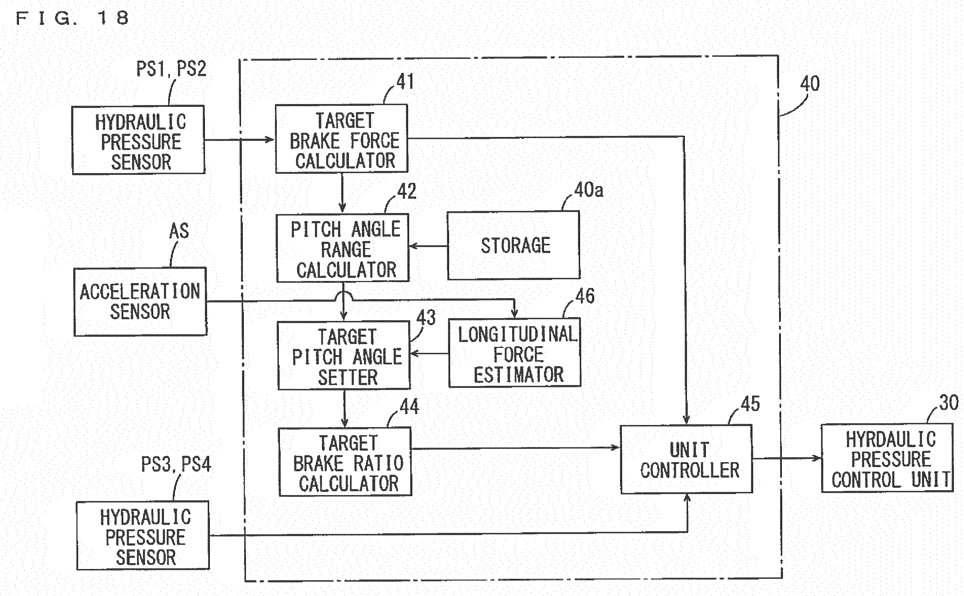

Fig. 18 is a diagram for explaining another example of the pitch angle control system. Regarding the example of Fig. 18, differences from the example of Fig. 3 will be described. The pitch angle control system of Fig. 18 includes an acceleration sensor AS that detects the acceleration of the motorcycle 100. Further, the controller 40 realizes the function of a longitudinal force estimator 46 in addition to each function shown in Fig. 3.

The longitudinal force estimator 46 estimates the longitudinal force exerted on each of the front wheel 14 and the rear wheel 82 based on a detection result of the acceleration sensor AS. The target pitch angle setter 43 sets the target pitch angle based on the longitudinal force estimated by the longitudinal force estimator 46.

In this case, the longitudinal force estimated by the longitudinal force estimator 46 corresponds to the brake force by each of the front wheel brake FB and the rear wheel brake RB of Fig. 2 and corresponds to other various conditions such as an engine brake and an air resistance. The target pitch angle is set based on the longitudinal force, so that the pitch angle suited for various conditions can be controlled.

In addition to the function of the controller 40 of Fig. 18, the function of the target pitch angle corrector 43a of Fig. 10 may be realized.

(12) Other Embodiments

(12-1)

In the above-mentioned embodiment, the target pitch angle is set between the maximum pitch angle and the minimum pitch angle, and the target brake ratio is calculated based on the maximum pitch angle, the minimum pitch angle and the target pitch angle. However, the present invention is not limited to this. For example, a map indicating a relationship between the target pitch angle and the target brake ratio may be stored in advance. In this case, the target pitch angle is set based on the target brake force, and the target brake ratio corresponding to the target pitch angle is acquired from the map. Thus, it is possible to calculate the target brake ratio without calculating the maximum pitch angle and the minimum pitch angle.

(12-2)

While the above-mentioned embodiment is an example in which the present invention is applied to the motorcycle, the invention is not limited to this. The present invention may be applied to another straddled vehicle such as a tricycle or an ATV (All Terrain Vehicle), or another vehicle such as a four-wheeled automobile.

(12-3)

While the above-mentioned embodiment is an example in which the present invention is applied to a vehicle including an engine as a motor, the invention is not limited to this. The present invention may be applied to an electric vehicle including the motor as an electric motor.

(13) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.
In the above-mentioned embodiment, the motorcycle 100 is an example of a vehicle, the front wheel brake FB is an example of a front wheel brake, the rear wheel brake RB is an example of a rear wheel brake, the hydraulic pressure control unit 30 is an example of a brake control unit, the brake lever 21 is an example of a front wheel brake inputter, the brake pedal 23 is an example of a rear wheel brake inputter, the hydraulic pressure sensor PS1 is an example of a front wheel brake detector, the hydraulic pressure sensor PS2 is an example of a rear wheel brake detector, the target brake force calculator 41 is an example of a target brake force calculator, the target pitch angle setter 43 is an example of a target pitch angle setter, the target brake ratio calculator 44 is an example of a target brake ratio calculator, the unit controller 45 is an example of a unit controller, the pitch angle range calculator 42 is an example of a pitch angle range calculator, and the longitudinal force estimator 46 is an example of a longitudinal force estimator.
As each of constituent elements recited in the claims, various other elements having configurations or functions described in the claims can be also used.

[Industrial Applicability]

The present invention can be effectively utilized for various vehicles.

**Claims**

1. A pitch angle control system provided in a vehicle (100) including a brake control unit (30) that controls a front wheel brake (FB) and a rear wheel brake (RB), wherein
the vehicle (100) includes a front wheel brake inputter (21) and a rear wheel brake inputter (23) operated by a driver, **characterized in that** the pitch angle control system comprises:

a front wheel brake detector (PS1) configured to detect an operation of the front wheel brake inputter (21) of the vehicle (100) by the driver;
a rear wheel brake detector (PS2) configured to detect an operation of the rear wheel brake inputter (23) of the vehicle (100) by the driver;
a target brake force calculator (41) configured to calculate a target brake force required by the driver based on the operation of the front wheel brake inputter (21) detected by the front wheel brake detector (PS1) and the operation of the rear wheel brake inputter (23) detected by the rear wheel brake detector (PS2);
a target pitch angle setter (43) configured to set a target pitch angle;
a target brake ratio calculator (44) configured to calculate a ratio between a target front wheel brake force to be exerted on a front wheel (14) of the vehicle (100) and a target rear wheel brake force to be exerted on a rear wheel (82) of the vehicle (100) as a target brake ratio such that a pitch angle of the vehicle (100) is a target pitch angle set by the target pitch angle setter (43); and
a unit controller (45) configured to control the brake control unit (30) such that a sum of an actual front wheel brake force actually exerted on the front wheel (14) and an actual rear wheel brake force actually exerted on the rear wheel (82) is the target brake force calculated by the target brake force calculator (41), and to control the brake control unit (30) such that a ratio between the actual front wheel brake force and the actual rear wheel brake force is the target brake ratio calculated by the target brake ratio calculator (44).

2. The pitch angle control system according to claim 1, further comprising a pitch angle range calculator (42) configured to calculate a pitch angle of the vehicle (100) of when the target brake force calculated by the target brake force calculator (41) is exerted on the front wheel (14) as a maximum pitch angle and to calculate a pitch angle of the vehicle (100) of when the target brake force calculated by the target brake force calculator (41) is exerted on the rear wheel (82) as a minimum pitch angle, wherein

14

the target pitch angle setter (43) is configured to set the target pitch angle between the maximum pitch angle and the minimum pitch angle calculated by the pitch angle range calculator (42), and
the target brake ratio calculator (44) is configured to calculate a ratio between a difference between the maximum pitch angle calculated by the pitch angle range calculator (42) and the target pitch angle set by the target pitch angle setter (43), and a difference between the target pitch angle set by the target pitch angle setter (43) and the minimum pitch angle calculated by the pitch angle range calculator (42).

3. The pitch angle control system according to claim 2, wherein
the larger the target brake force calculated by the target brake force calculator (41) is, the larger the target pitch angle setter (43) sets the target pitch angle to be.

4. The pitch angle control system according to any one of claims 1 to 3, wherein
the target pitch angle setter (43) is configured to set a pitch moment limit range based on the target brake force calculated by the target brake force calculator (41) and to correct the target pitch angle such that a pitch moment of the vehicle (100) is in the pitch moment limit range.

5. The pitch angle control system according to claim 4, wherein
the target pitch angle setter (43) is configured to calculate a ratio between a normal force applied to the front wheel (14) from a ground surface and a normal force applied to the rear wheel (82) from the ground surface as a drag ratio and to set the target pitch angle based on the calculated drag ratio.

6. The pitch angle control system according to any one of claims 1 to 5, wherein
the brake control unit (30) includes an antilock brake system, and
the target brake force calculator (41) is configured to correct the target brake force based on an operation of the antilock brake system.

7. The pitch angle control system according to any one of claims 1 to 6, further comprising a longitudinal force estimator (46) configured to estimate longitudinal forces of the front wheel and the rear wheel, wherein
the target pitch angle setter (43) is configured to set the target pitch angle based on the longitudinal force estimated by the longitudinal force estimator (46).

8. A method of controlling a pitch angle of a straddled vehicle (100) including a brake control unit (30) that controls a front wheel brake (FB) and a rear wheel brake (RB), wherein
the vehicle includes a front wheel brake inputter (21) and a rear wheel brake inputter (23) operated by a driver,
the method of controlling the pitch angle being **characterized by** comprising the steps of:

> detecting an operation of the front wheel brake inputter (21) of the vehicle by the driver;
> detecting an operation of the rear wheel brake inputter (23) of the vehicle by the driver;
> calculating a target brake force required by the driver based on the detected operation of the front wheel brake inputter (21) and the detected operation of the rear wheel brake inputter (23);
> setting a target pitch angle;
> calculating a ratio between a target front wheel brake force to be exerted on a front wheel (14) of the vehicle (100) and a target rear wheel brake force to be exerted on a rear wheel (82) of the vehicle (100) as a target brake ratio such that a pitch angle of the vehicle is a set target pitch angle; and
> controlling the brake control unit (30) such that a sum of an actual front wheel brake force actually exerted on the front wheel (14) and an actual rear wheel brake force actually exerted on the rear wheel (82) is the calculated target brake force, and controlling the brake control unit (30) such that a ratio between the actual front wheel brake force and the actual rear wheel brake force is the calculated target brake ratio.

9. A vehicle (100) comprising:

> a main body having a front wheel (14) and a rear wheel (82);
> a motor (17) that generates a driving force for moving the main body;
> a front wheel brake inputter (21) operated by a driver;
> a rear wheel brake inputter (23) operated by the driver;
> a front wheel brake (FB) that brakes the front wheel (14);
> a rear wheel brake (RB) that brakes the rear wheel (82);
> a brake control unit (30) configured to control the front wheel brake (FB) and the rear wheel brake (RB) based on operations of the front wheel brake inputter (21) and the rear wheel brake inputter (23) by the driver; and the pitch angle control system according to any one of claims 1 to 7.

**Patentansprüche**

1. Nickwinkelsteuersystem, das in einem Fahrzeug (100) bereitgestellt ist, das eine Bremssteuereinheit (30) beinhaltet, die eine Vorderradbremse (FB) und eine Hinterradbremse (RB) steuert, wobei
das Fahrzeug (100) einen Vorderradbremseingeber (21) und einen Hinterradbremseingeber (23) beinhaltet, die von einem Fahrer betätigt werden,
**dadurch gekennzeichnet, dass** das Nickwinkelsteuersystem umfasst:

   einen Vorderradbremsdetektor (PS1), der dazu konfiguriert ist, eine Betätigung des Vorderradbremseingebers (21) des Fahrzeugs (100) durch den Fahrer zu ermitteln;
   einen Hinterradbremsdetektor (PS2), der dazu konfiguriert ist, eine Betätigung des Hinterradbremseingebers (23) des Fahrzeugs (100) durch den Fahrer zu ermitteln;
   einen Zielbremskraftberechner (41), der dazu konfiguriert ist, eine Zielbremskraft zu berechnen, die von dem Fahrer angefordert wird, basierend auf der Betätigung des Vorderradbremseingebers (21), die von dem Vorderradbremsdetektor (PS1) ermittelt wird, und der Betätigung des Hinterradbremseingebers (23), die von dem Hinterradbremsdetektor (PS2) ermittelt wird;
   einen Zielnickwinkeleinsteller (43), der dazu konfiguriert ist, einen Zielnickwinkel einzustellen;
   einen Zielbremsverhältnisberechner (44), der dazu konfiguriert ist, ein Verhältnis zwischen einer Ziel-Vorderradbremskraft, die auf ein Vorderrad (14) des Fahrzeugs (100) auszuüben ist, und einer Ziel-Hinterradbremskraft, die auf ein Hinterrad (82) des Fahrzeugs (100) auszuüben ist, als ein Zielbremsverhältnis zu berechnen, so dass ein Nickwinkel des Fahrzeugs (100) ein Zielnickwinkel ist, der von dem Zielnickwinkeleinsteller (43) eingestellt wird; und
   eine Einheitssteuerung (45), die dazu konfiguriert ist, die Bremssteuereinheit (30) so zu steuern, dass eine Summe einer tatsächlichen Vorderradbremskraft, die tatsächlich auf das Vorderrad (14) ausgeübt wird, und einer tatsächlichen Hinterradbremskraft, die tatsächlich auf das Hinterrad (82) ausgeübt wird, die Zielbremskraft ist, die von dem Zielbremskraftberechner (41) berechnet wird, und die Bremssteuereinheit (30) so zu steuern, dass ein Verhältnis zwischen der tatsächlichen Vorderradbremskraft und der tatsächlichen Hinterradbremskraft das Zielbremsverhältnis ist, das von dem Zielbremsverhältnisberechner (44) berechnet wird.

2. Nickwinkelsteuersystem nach Anspruch 1, des Weiteren umfassend einen Nickwinkelbereichsberechner (42), der dazu konfiguriert ist, einen Nickwinkel des Fahrzeugs (100) für den Zeitpunkt, an dem die von dem Zielbremskraftberechner (41) berechnete Zielbremskraft auf das Vorderrad (14) ausgeübt wird, als einen maximalen Nickwinkel zu berechnen, und einen Nickwinkel des Fahrzeugs (100) für den Zeitpunkt, an dem die von dem Zielbremskraftberechner (41) berechnete Zielbremskraft auf das Hinterrad (82) ausgeübt wird, als einen minimalen Nickwinkel zu berechnen, wobei
der Zielnickwinkeleinsteller (43) dazu konfiguriert ist, den Zielnickwinkel zwischen dem maximalen Nickwinkel und dem minimalen Nickwinkel, die von dem Nickwinkelbereichsberechner (42) berechnet werden, einzustellen, und
der Zielbremsverhältnisberechner (44) dazu konfiguriert ist, ein Verhältnis zwischen einer Differenz zwischen dem maximalen Nickwinkel, der von dem Nickwinkelbereichsberechner (42) berechnet wird, und dem Zielnickwinkel zu berechnen, der von dem Zielnickwinkeleinsteller (43) eingestellt wird, und eine Differenz zwischen dem Zielnickwinkel, der von dem Zielnickwinkeleinsteller (43) eingestellt wird, und dem minimalen Nickwinkel zu berechnen, der von dem Nickwinkelbereichsberechner (42) berechnet wird.

3. Nickwinkelsteuersystem nach Anspruch 2, wobei
je größer die von dem Zielbremskraftberechner (41) berechnete Zielbremskraft ist, desto größer der Zielnickwinkeleinsteller (43) den Zielnickwinkel einstellt.

4. Nickwinkelsteuersystem nach einem der Ansprüche 1 bis 3, wobei der Zielnickwinkeleinsteller (43) dazu konfiguriert ist, einen Nickwinkelmoment-Grenzbereich basierend auf der Zielbremskraft einzustellen, die von dem Zielbremskraftberechner (41) berechnet wird, und den Zielnickwinkel so zu korrigieren, dass ein Nickmoment des Fahrzeugs (100) im Nickwinkelmoment-Grenzbereich liegt.

5. Nickwinkelsteuersystem nach Anspruch 4, wobei
der Zielnickwinkeleinsteller (43) dazu konfiguriert ist, ein Verhältnis zwischen einer normalen Kraft, die von einer Fahrbahn auf den Vorderreifen ausgeübt wird, und einer normalen Kraft, die von der Fahrbahn auf das Hinterrad (82) ausgeübt wird, als ein Widerstandsverhältnis zu berechnen, und den Zielnickwinkel basierend auf dem berechneten Widerstandsverhältnis einzustellen.

6. Nickwinkelsteuersystem nach einem der Ansprüche 1 bis 5, wobei
die Bremssteuereinheit (30) ein Antiblockiersystem beinhaltet, und
der Zielbremskraftberechner (41) dazu konfiguriert ist, die Zielbremskraft basierend auf einer Betätigung des Antiblockiersystems zu korrigieren.

7. Nickwinkelsteuersystem nach einem der Ansprüche 1 bis 6, des Weiteren umfassend eine Längskraft-Schätzeinrichtung (46), die dazu konfiguriert ist, Längskräfte des Vorderrades und des Hinterrades zu schätzen, wobei
der Zielnickwinkeleinsteller (43) dazu konfiguriert ist, den Zielnickwinkel basierend auf der Längskraft einzustellen, die von der Längskraft-Schätzeinrichtung (46) geschätzt wird.

8. Verfahren zum Steuern eines Nickwinkels eines Aufsitzfahrzeugs (100), das eine Bremssteuereinheit (30) beinhaltet, die eine Vorderradbremse (FB) und eine Hinterradbremse (RB) steuert, wobei
das Fahrzeug einen Vorderradbremseingeber (21) und einen Hinterradbremseingeber (23) beinhaltet, die von einem Fahrer betätigt werden,
wobei das Verfahren zum Steuern des Nickwinkels **dadurch gekennzeichnet ist, dass** es folgende Schritte umfasst:

Ermitteln einer Betätigung des Vorderradbremseingebers (21) des Fahrzeugs durch den Fahrer;
Ermitteln einer Betätigung des Hinterradbremseingebers (23) des Fahrzeugs durch den Fahrer;
Berechnen einer Zielbremskraft, die von dem Fahrer angefordert wird, basierend auf der ermittelten Betätigung des Vorderradbremseingebers (21) und der ermittelten Betätigung des Hinterradbremseingebers (23);
Einstellen eines Zielnickwinkels;
Berechnen eines Verhältnisses zwischen einer Ziel-Vorderradbremskraft, die auf ein Vorderrad (14) des Fahrzeugs (100) auszuüben ist, und einer Ziel-Hinterradbremskraft, die auf ein Hinterrad (82) des Fahrzeugs (100) auszuüben ist, als ein Zielbremsverhältnis, so dass ein Nickwinkel des Fahrzeugs ein eingestellter Zielnickwinkel ist; und
Steuern der Bremssteuereinheit (30), so dass eine Summe einer tatsächlichen Vorderradbremskraft, die tatsächlich auf das Vorderrad (14) ausgeübt wird, und einer tatsächlichen Hinterradbremskraft, die tatsächlich auf das Hinterrad (82) ausgeübt wird, die berechnete Zielbremskraft ist, und Steuern der Bremssteuereinheit (30) so, dass ein Verhältnis zwischen der tatsächlichen Vorderradbremskraft und der tatsächlichen Hinterradbremskraft das berechnete Zielbremsverhältnis ist.

9. Fahrzeug (100), umfassend:

einen Hauptkörper mit einem Vorderrad (14) und einem Hinterrad (82);
einen Motor (17), der eine Antriebskraft zum Bewegen des Hauptkörpers erzeugt;
einen Vorderradbremseingeber (21), der von einem Fahrer betätigt wird;
einen Hinterradbremseingeber (23), der von dem Fahrer betätigt wird;
eine Vorderradbremse (FB), welche das Vorderrad (14) bremst;
eine Hinterradbremse (RB), die das Hinterrad (82) bremst;
eine Bremssteuereinheit (30), die dazu konfiguriert ist, die Vorderradbremse (FB) und die Hinterradbremse (RB) basierend auf Betätigungen des Vorderradbremseingebers (21) und des Hinterradbremseingebers (23) durch den Fahrer zu steuern; und
das Nickwinkelsteuersystem nach einem der Ansprüche 1 bis 7.

**Revendications**

1. Système de contrôle d'angle d'inclinaison fourni dans un véhicule (100) incluant une unité de contrôle de frein (30) qui contrôle un frein de roue avant (FB) et un frein de roue arrière (RB), dans lequel
le véhicule (100) comprend un actionneur de frein de roue avant (21) et un actionneur de frein de roue arrière (23) activés par un conducteur,
**caractérisé en ce que** le système de contrôle d'angle d'inclinaison comprend :

un détecteur de frein de roue avant (PS1) configuré pour détecter une activation de l'actionneur de frein de roue avant (21) du véhicule (100) par le conducteur ;

un détecteur de frein de roue arrière (PS2) configuré pour détecter une activation de l'actionneur de frein de roue arrière (23) du véhicule (100) par le conducteur ;

un calculateur de force de frein cible (41) configuré pour calculer une force de frein cible requise par le conducteur en fonction de l'activation de l'actionneur de frein de roue avant (21) détectée par le détecteur de frein de roue avant (PS1)

et l'activation de l'actionneur de frein de roue arrière (23) détectée par le détecteur de frein de roue arrière (PS2) ;

un régleur d'angle d'inclinaison cible (43) configuré pour définir un angle d'inclinaison cible ;

un calculateur de rapport de frein cible (44) configuré pour calculer un rapport entre une force de frein de roue avant cible à exercer sur une roue avant (14) du véhicule (100) et une force de frein de roue arrière cible à exercer sur une roue arrière (82) du véhicule (100) en tant que rapport de frein cible de sorte qu'un angle d'inclinaison du véhicule (100) constitue un angle d'inclinaison cible défini par le régleur d'angle d'inclinaison cible (43) ; et

un contrôleur d'unité (45) configuré pour contrôler l'unité de contrôle de frein (30) de sorte qu'une somme d'une force de frein de roue avant réelle effectivement exercée sur la roue avant (14) et une force de frein de roue arrière réelle effectivement exercée sur la roue arrière (82) constitue la force de frein cible calculée par le calculateur de force de frein cible (41), et pour contrôler l'unité de contrôle de frein (30) de sorte qu'un rapport entre la force de frein de roue avant réelle et la force de frein de roue arrière réelle constitue le rapport de frein cible calculé par le calculateur de rapport de frein cible (44).

2. Le système de contrôle d'angle d'inclinaison selon la revendication 1, comprenant en outre un calculateur de plage angulaire d'inclinaison (42) configuré pour calculer un angle d'inclinaison du véhicule (100) du moment où la force de frein cible calculée par le calculateur de force de frein cible (41) est exercée sur la roue avant (14) en tant qu'angle d'inclinaison maximal et pour calculer un angle d'inclinaison du véhicule (100) du moment où la force de frein cible calculée par le calculateur de force de frein cible (41) est exercée sur la roue arrière (82) en tant qu'angle d'inclinaison minimal, dans lequel

le régleur d'angle d'inclinaison cible (43) est configuré pour définir l'angle d'inclinaison cible entre l'angle d'inclinaison maximal et l'angle d'inclinaison minimal calculés par le calculateur de plage angulaire d'inclinaison (42), et

le calculateur de rapport de frein cible (44) est configuré pour calculer un rapport entre une différence entre l'angle d'inclinaison maximal calculé par le calculateur de plage angulaire d'inclinaison (42) et l'angle d'inclinaison cible défini par le régleur d'angle d'inclinaison cible (43), et une différence entre l'angle d'inclinaison cible défini par le régleur d'angle d'inclinaison cible (43) et l'angle d'inclinaison minimal calculé par le calculateur de plage angulaire d'inclinaison (42).

3. Le système de contrôle d'angle d'inclinaison selon la revendication 2, dans lequel

plus la force de frein cible calculée par le calculateur de force de frein cible (41) est grande, plus le régleur d'angle d'inclinaison cible (43) augmente l'angle d'inclinaison cible qu'il définit.

4. Le système de contrôle d'angle d'inclinaison selon une parmi les revendications 1 à 3, dans lequel

le régleur d'angle d'inclinaison cible (43) est configuré pour définir une plage de limite de moment d'inclinaison en fonction de la force de frein cible calculée par le calculateur de force de frein cible (41) et pour corriger l'angle d'inclinaison cible de sorte qu'un moment d'inclinaison du véhicule (100) s'inscrive dans la plage de limite de moment d'inclinaison.

5. Le système de contrôle d'angle d'inclinaison selon la revendication 4, dans lequel

le régleur d'angle d'inclinaison cible (43) est configuré pour calculer un rapport entre une force normale appliquée à la roue avant (14) depuis une surface au sol et une force normale appliquée à la roue arrière (82) depuis une surface au sol sous forme d'un taux de traînée et pour définir l'angle d'inclinaison cible en fonction du taux de traînée calculé.

6. Le système de contrôle d'angle d'inclinaison selon une parmi les revendications 1 à 5, dans lequel

l'unité de contrôle de frein (30) comprend un système de frein antiblocage, et

le calculateur de force de frein cible (41) est configuré pour corriger la force de frein cible en fonction d'une activation du système de frein antiblocage.

7. Le système de contrôle d'angle d'inclinaison selon une parmi les revendications 1 à 6, comprenant en outre un estimateur de force longitudinale (46) configuré pour estimer des forces longitudinales de la roue avant et la roue arrière, dans lequel

le régleur d'angle d'inclinaison cible (43) est configuré pour définir l'angle d'inclinaison cible en fonction de la force longitudinale estimée par l'estimateur de force longitudinale (46).

8. Procédé de contrôle d'un angle d'inclinaison d'un véhicule enfourché (100) incluant une unité de contrôle de frein (30) qui contrôle un frein de roue avant (FB) et un frein de roue arrière (RB), dans lequel

le véhicule comprend un actionneur de frein de roue avant (21) et un actionneur de frein de roue arrière (23) activés par le conducteur,

le procédé de contrôle de l'angle d'inclinaison étant **caractérisé par** l'inclusion des étapes de :

détection d'une activation de l'actionneur de frein de roue avant (21) du véhicule par le conducteur ;
détection d'une activation de l'actionneur de frein de roue arrière (23) du véhicule par le conducteur ;
calcul d'une force de frein cible requise par le conducteur en fonction de l'activation détectée de l'actionneur de frein de roue avant (21) et de l'activation détectée de l'actionneur de frein de roue arrière (23) ;
définition d'un angle d'inclinaison cible ;
calcul d'un rapport entre une force de frein de roue avant cible à exercer sur une roue avant (14) du véhicule (100) et une force de frein de roue arrière cible à exercer sur une roue arrière (82) du véhicule (100) en tant que rapport de frein cible de sorte qu'un angle d'inclinaison du véhicule constitue un angle d'inclinaison cible défini ; et
contrôle de l'unité de contrôle de frein (30) de sorte qu'une somme d'une force de frein de roue avant réelle effectivement exercée sur la roue avant (14) et une force de frein de roue arrière réelle effectivement exercée sur la roue arrière (82) constitue la force de frein cible calculée, et contrôle de l'unité de contrôle de frein (30) de sorte qu'un rapport entre la force de frein de roue avant réelle et la force de frein de roue arrière réelle constitue le rapport de frein cible calculé.

9. Véhicule (100) comprenant :

un châssis principal disposant d'une roue avant (14) et d'une roue arrière (B2) ;
un moteur (17) qui génère une force d'entraînement pour déplacer le châssis principal ;
un actionneur de frein de roue avant (21) activé par un conducteur ;
un actionneur de frein de roue arrière (23) activé par le conducteur ;
un frein de roue avant (FB) qui freine la roue avant (14) ;
un frein de roue arrière (RB) qui freine la roue arrière (82) ;
une unité de contrôle de frein (30) configurée pour contrôler le frein de roue avant (FB) et le frein de roue arrière (RB) en fonction des activations de l'actionneur de frein de roue avant (21) et de l'actionneur de frein de roue arrière (23) actionné par le conducteur ; et
le système de contrôle d'angle d'inclinaison selon une parmi les revendications 1 à 7.

FIG. 1

F I G . 2

EP 3 037 309 B1

FIG. 3

EP 3 037 309 B1

FIG. 4

(a) STANDING STILL

(b) BEING BRAKED

FIG. 5

(a) BEING BRAKED

(b) BEING BRAKED

FIG. 6

MAXIMUM PITCH ANGLE

TARGET PITCH ANGLE

MINIMUM PITCH ANGLE

PITCH ANGLE

TARGET BRAKE FORCE

FIG. 7

(a)

(b)

FIG. 8

(a)

(b)

FIG. 9

```
        ╭─────────────────────╮
        │    PITCH ANGLE      │
        │  CONTROL PROCESS    │
        ╰─────────────────────╯
                  │
                  ▼
        ╱─────────────────────╲  S1
       ╱     IS HYDRAULIC      ╲
      │   PRESSURE OF MASTER    │
      │ CYLINDER NOT LESS THAN  │──── No
       ╲   THRESHOLD VALUE?    ╱        │
        ╲─────────────────────╱         │
              Yes │  S2                 │
                  ▼                     │
        ┌─────────────────────┐         │
        │  CALCULATE TARGET    │         │
        │     BRAKE FORCE      │         │
        └─────────────────────┘         │
                  │  S3                 │
                  ▼                     │
        ┌─────────────────────┐         │
        │ CALCULATE MAXIMUM    │         │
        │ PITCH ANGLE AND      │         │
        │ MINIMUM PITCH ANGLE  │         │
        └─────────────────────┘         │
                  │  S4                 │
                  ▼                     │
        ┌─────────────────────┐         │
        │ SET TARGET PITCH     │         │
        │       ANGLE          │         │
        └─────────────────────┘         │
                  │  S5                 │
                  ▼                     │
        ┌─────────────────────┐         │
        │ SET TARGET BRAKE     │         │
        │       RATIO          │         │
        └─────────────────────┘         │
                  │  S6                 │
                  ▼                     │
        ┌─────────────────────┐         │
        │ CALCULATE TARGET     │         │
        │ FRONT WHEEL          │         │
        │ HYDRAULIC PRESSURE   │         │
        │ AND TARGET REAR      │         │
        │ WHEEL HYDRAULIC      │         │
        │ PRESSURE             │         │
        └─────────────────────┘         │
                  │  S7                 │
                  ▼                     │
        ┌─────────────────────┐         │
        │ CONTROL HYDRAULIC    │         │
        │ PRESSURE CONTROL UNIT│         │
        └─────────────────────┘         │
                  │◄────────────────────┘
                  ▼
        ╭─────────────────────╮
        │      FINISH         │
        ╰─────────────────────╯
```

28

EP 3 037 309 B1

F I G. 1 1

43a

$\theta$

51
PITCH ANGLE
DEVIATION
CALCULATOR

$\triangle \theta$

52
PITCH ANGLE
TRACKING
CONTROLLER

$\theta'$

53
PITCH RATE
DEVIATION
CALCULATOR

$\triangle \theta'$

54
PITCH RATE
TRACKING
CONTROLLER

$\theta''$

55
PITCH MOMENT
LIMITER

$\theta a''$

56
POST-CORRECTION
PITCH RATE
CALCULATOR

$\theta a'$

$\theta a'$

57
POST-CORRECTION
TARGET PITCH ANGLE
CALCULATOR

$\theta a$

$\theta a$

FIG. 12

FIG. 13

(a)

POST-CORRECTION TARGET
PITCH ANGLE $\theta a$

PRE-CORRECTION TARGET
PITCH ANGLE $\theta$

(b)

POST-CORRECTION PITCH RATE $\theta a'$

PRE-CORRECTION
PITCH RATE $\theta'$

(c)

PRE-CORRECTION PITCH MOMENT $\theta''$

POST-CORRECTION PITCH MOMENT $\theta a''$

32

EP 3 037 309 B1

FIG. 14

```
        ┌─────────────────────┐
        │     PITCH ANGLE     │
        │  CONTROL PROCESS    │
        └──────────┬──────────┘
                   │
          ╱────────────────────╲        S1
         ╱   IS HYDRAULIC        ╲
        ╱  PRESSURE  OF MASTER    ╲
        ╲ CYLINDER NOT LESS THAN  ╱  No
         ╲   THRESHOLD VALUE?    ╱
          ╲────────────────────╱
              Yes │                     S2
        ┌─────────────────────┐
        │  CALCULATE TARGET    │
        │     BRAKE FORCE      │
        └──────────┬──────────┘
                   │                    S3
        ┌─────────────────────┐
        │ CALCULATE MAXIMUM PITCH │
        │ ANGLE AND MINIMUM PITCH │
        │        ANGLE         │
        └──────────┬──────────┘
                   │                    S4
        ┌─────────────────────┐
        │ SET TARGET PITCH ANGLE │
        └──────────┬──────────┘
                   │                    S4a
        ┌─────────────────────┐
        │  TARGET PITCH ANGLE  │
        │ CORRECTION PROCESS   │
        └──────────┬──────────┘
                   │                    S5
        ┌─────────────────────┐
        │  SET TARGET BRAKE RATIO │
        └──────────┬──────────┘
                   │                    S6
        ┌─────────────────────┐
        │ CALCULATE TARGET FRONT │
        │ WHEEL HYDRAULIC PRESSURE │
        │ AND TARGET REAR WHEEL  │
        │  HYDRAULIC PRESSURE   │
        └──────────┬──────────┘
                   │                    S7
        ┌─────────────────────┐
        │  CONTROL HYDRAULIC   │
        │ PRESSURE CONTROL UNIT │
        └──────────┬──────────┘
                   │
           ┌───────────────┐
           │    FINISH     │
           └───────────────┘
```

F I G. 1 5

```
        ┌─────────────────────────┐
        │   TARGET PITCH ANGEL    │
        │   CORRECTION PROCESS    │
        └────────────┬────────────┘
                     │              S11
        ┌────────────▼────────────┐
        │   CALCULATE PITCH       │
        │   ANGLE DEVIATION       │
        └────────────┬────────────┘
                     │              S12
        ┌────────────▼────────────┐
        │ CALCULATE PRE-CORRECTION│
        │       PITCH RATE        │
        └────────────┬────────────┘
                     │              S13
        ┌────────────▼────────────┐
        │   CALCULATE PITCH       │
        │   RATE DEVIATION        │
        └────────────┬────────────┘
                     │              S14
        ┌────────────▼────────────┐
        │ CALCULATE PRE-CORRECTION│
        │      PITCH MOMENT       │
        └────────────┬────────────┘
                     │              S15
        ┌────────────▼────────────┐
        │    SET PM LIMIT RANGE   │
        └────────────┬────────────┘
                     │
                     │              S16
              ╱──────▼──────╲
             ╱ IS PRE-CORRECTION╲        No
            ⟨ PITCH MOMENT IN PM ⟩───────────┐
             ╲ LIMIT RANGE?    ╱             │
              ╲──────┬──────╱                │
              Yes    │        S17            │         S18
        ┌────────────▼────────────┐  ┌───────▼──────────────┐
        │ SET PRE-CORRECTION PITCH│  │ SET POST-CORRECTION  │
        │ MOMENT TO POST-CORRECTION│  │ PITCH MOMENT TO      │
        │     PITCH MOMENT        │  │ UPPER LIMIT VALUE OR  │
        └────────────┬────────────┘  │ LOWER LIMIT VALUE OF  │
                     │               │    PM LIMIT RANGE     │
                     │               └───────┬──────────────┘
                     │◄──────────────────────┘
                     │              S19
        ┌────────────▼────────────┐
        │ CALCULATE POST-CORRECTION│
        │       PITCH RATE        │
        └────────────┬────────────┘
                     │              S20
        ┌────────────▼────────────┐
        │ CALCULATE POST-CORRECTION│
        │    TARGET PITCH RATE    │
        └────────────┬────────────┘
                     │
              ┌──────▼──────┐
              │   FINISH    │
              └─────────────┘
```

# FIG. 16

### (a) STANDING STILL

### (b) BEING BRAKED

FIG. 17

| | OPERATION STATES OF ABS | | | |
|---|---|---|---|---|
| | NO OPERATION | OPERATED ONLY WITH RESPECT TO FRONT WHEEL | OPERATED ONLY WITH RESPECT TO REAR WHEEL | OPERATED WITH RESPECT TO BOTH FRONT AND REAR WHEELS |
| INPUT FRONT WHEEL BRAKE FORCE | M/C HYDRAULIC PRESSURE | CALIPER HYDRAULIC PRESSURE | M/C HYDRAULIC PRESSURE | CALIPER HYDRAULIC PRESSURE |
| INPUT REAR WHEEL BRAKE FORCE | M/C HYDRAULIC PRESSURE | M/C HYDRAULIC PRESSURE | CALIPER HYDRAULIC PRESSURE | CALIPER HYDRAULIC PRESSURE |

EP 3 037 309 B1

FIG. 18

PS1, PS2

HYDRAULIC
PRESSURE
SENSOR

41

TARGET
BRAKE FORCE
CALCULATOR

40a

42

PITCH ANGLE
RANGE
CALCULATOR

STORAGE

AS

ACCELERATION
SENSOR

46

43

TARGET
PITCH ANGLE
SETTER

LONGITUDINAL
FORCE
ESTIMATOR

44

TARGET
BRAKE RATIO
CALCULATOR

45

UNIT
CONTROLLER

30

HYRDAULIC
PRESSURE
CONTROL UNIT

PS3, PS4

HYDRAULIC
PRESSURE
SENSOR

40

EP 3 037 309 B1

37

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012519110 A
- EP 2551158 A1
- WO 2007148225 A